# EUROPÄISCHE PATENTSCHRIFT

(11) **EP 4 272 381 B1**
(45) Veröffentlichungstag und Bekanntmachung des Hinweises auf die Patenterteilung: **20.08.2025**
(21) Anmeldenummer: 21830703.1
(22) Anmeldetag: 28.12.2021
(51) Int. Cl.: H04L 12/403

(54) **TEILNEHMER FÜR EIN KOMMUNIKATIONSBUSSYSTEM**
SUBSCRIBER FOR A COMMUNICATION BUS SYSTEM
ABONNÉ POUR UN SYSTÈME DE BUS DE COMMUNICATION

(30) Priorität: 29.12.2020 EP 20217493; 29.12.2020 EP 20217497
(43) Veröffentlichungstag der Anmeldung: 08.11.2023
(73) Patentinhaber: Elmos Semiconductor SE, 44227 Dortmund (DE)
(72) Erfinder: FRONEN, Rob, 44227 Dortmund (DE); PARKALIAN, Nina, 44227 Dortmund (DE); HAUSCHILD, Ralf, 44227 Dortmund (DE)
(74) Vertreter: dompatent von Kreisler Selting Werner - Partnerschaft von Patent- und Rechtsanwälten mbB
(86) Internationale Anmeldenummer: PCT/EP2021/087704
(87) Internationale Veröffentlichungsnummer: WO 2022/144345

(56) Entgegenhaltungen:
- WO-A1-2016/071115
- DE-A1- 10 261 386
- DE-A1- 102004 046 186
- DE-A1- 102007 032 237

## Beschreibung

Die vorliegende Patentanmeldung nimmt die Priorität der beiden früheren europäischen Patentanmeldungen 20 217 493.4 und 20 217 497.5, beide vom 29. Dezember 2020 in Anspruch.

Die Erfindung betrifft einen Teilnehmer für ein Kommunikationsbussystem mit einer mehrere Zweidrahtleitungsabschnitte aufweisenden Zweidrahtleitung als differenzieller Kommunikationsbus zur Verbindung mehrerer Teilnehmer in Reihenschaltung mit einem Busmaster und zur Kommunikation mittels differenzieller elektrischer Signale, wobei die Zweidrahtleitung eine erste Leitung und eine zweite Leitung aufweist und jeder Zweidrahtleitungsabschnitt einen Abschnitt der ersten Leitung und einen Abschnitt der zweiten Leitung aufweist. Die Erfindung betrifft also einen Teilnehmer eines Daisy-Chain-Bussystems.

Derartige Kommunikationsbussysteme werden in zunehmendem Maße für Innenbeleuchtungsanwendungen bei Fahrzeugen eingesetzt. Sie zeichnen sich durch hohe Übertragungsraten und einen einfachen Aufbau aus. Grundsätzlich problematisch bei Daisy-Chain-Bussystemen ist allerdings, dass der Ausfall eines Teilnehmers dazu führen kann, dass die vom Busmaster aus gesehen hinter dem ausgefallenen Teilnehmer angeordneten Teilnehmer nicht mehr angesteuert werden können.

Zur Lösung dieser Problematik ist es aus dem Stand der Technik bekannt, in dem Datenbus die Anschlüsse eines Teilnehmers überbrückende Schalter anzuordnen (siehe beispielsweise EP-A-3 264 680, WO-A-2009/040015, WO-A-2017/125440, WO-A-2018/114937 und US-A-2007/0025240). Allerdings erfordert wiederum die Ansteuerung dieser Schalter einen erhöhten Aufwand innerhalb jedes Teilnehmers und auch auf Seiten des Busmasters.

In DE-A-10 2007 032 237 ist ein Teilnehmer für ein Kommunikationsbussystem beschrieben, das mit einer mehrere Zweidrahtleitungsabschnitte aufweisenden Zweidrahtleitung als differenzieller Kommunikationsbus zur Verbindung mehrerer Teilnehmer in Reihenschaltung mit einem Busmaster und zur Kommunikation mittels elektrischer differenzieller Signale versehen ist, wobei die Zweidrahtleitung eine erste Leitung und eine zweite Leitung aufweist und jeder Zweidrahtleitungsabschnitt einen Abschnitt der ersten Leitung und einen Abschnitt der zweiten Leitung umfasst.

Aufgabe der Erfindung ist es, einen Teilnehmer für ein Kommunikationsbussystem nach dem Daisy-Chain-Konzept zu schaffen, der hinsichtlich seines Aufbaus zwecks Weiterleitung der Datenkommunikation bei einem Ausfall des Teilnehmers vereinfacht ist. Des Weiteren ist es Aufgabe der Erfindung, ein Verfahren zur Datenkommunikation in einem Kommunikationsbussystem nach dem Daisy-Chain-Konzept zu schaffen, in dem erfindungsgemäße Teilnehmer eingesetzt werden.

Zur Lösung dieser Aufgabe schafft die Erfindung einen Teilnehmer entsprechend Anspruch 1.

Wesentliche Merkmale des erfindungsgemäßen Teilnehmers sind zwei Überbrückungswiderstände, die neben dem an sich bekannten Abschlusswiderstand des Teilnehmers vorgesehen sind. Der Abschlusswiderstand des erfindungsgemäßen Teilnehmers liegt parallel zu den beiden Anschlüssen des Empfängers, wobei dieser Abschlusswiderstand in Serie mit einem Testschalter verschaltet ist, bei dem es sich typischerweise um einen Transistor (z.B. FET, MOSFET) handelt. Testschalter und Abschlusswiderstand liegen also parallel zu den Eingangsanschlüssen des Teilnehmers.

Der erfindungsgemäße Teilnehmer weist einen Empfänger und einen Sender auf. Der Empfänger ist an die beiden zum Teilnehmer führenden Zweidrahtleitungsabschnitte verbunden. Sein Ausgangssignal wird der Datenverarbeitungseinheit des Teilnehmers zugeführt, die applikationsabhängig eine Hardware steuert, bei der es sich um eine Fahrzeugkomponente handelt. Die Erfindung ist nämlich vorzugsweise für die Anwendung in einem Fahrzeug gedacht, und zwar für lichttechnische Anwendungen wie die Innenraumbeleuchtung, Ambient Light Anwendungen o.dgl.

Der erfindungsgemäße Teilnehmer weist des Weiteren einen Sender auf, der von der Datenverarbeitungseinheit mit Signalen versorgt wird und seinerseits an die beiden zum nächsten Teilnehmer führenden Zweidrahtleitungsabschnitten angeschlossen ist.

Erfindungsgemäß weist der Teilnehmer zwei weitere Widerstände, nämlich zwei Überbrückungswiderstände auf, von denen der eine zwischen die beiden zum Teilnehmer führenden und vom Teilnehmer wegführenden Zweidrahtleitungsabschnitte der einen Leitung und der andere Überbrückungswiderstand in die beiden ebenfalls zum Teilnehmer führenden und von diesem zum nächsten Teilnehmer führenden Zweidrahtleitungsabschnitte der anderen Leitung geschaltet ist.

Der Schaltzustand des Testschalters signalisiert, ob der Teilnehmer defekt oder intakt ist. Typischerweise ist der Testschalter geschlossen, wenn der Teilnehmer intakt ist, seine Funktionstüchtigkeit also gegeben ist. Der Transistor ist z.B. (ohne Ansteuerung) sperrend (Transistor vom Anreichungstyp) und wird bei erfolgreich durchgeführtem Selbsttest durch ein Ansteuersignal des Microcontrollers, wie er bei sogenannten Smart Clients vorhanden ist, in den leitenden Zustand überführt. Damit liegt eine Serienschaltung aus Testschalter und Abschlusswiderstand vor. Bei einer Parallelschaltung aus beidem wäre der Testschalter dann, wenn der Teilnehmer intakt ist, offen.

Bei geöffnetem Testschalter, d.h. bei einem nicht funktionstüchtigen Teilnehmer, wird seitens des Empfängers automatisch erkannt, dass das Eingangssignal auf Grund des nicht zugeschalteten Abschlusswiderstandes in einem Spannungsbereich außerhalb des Sollspannungsbereichs liegt. Die Signale auf den Leitungen werden dann über die Überbrückungswiderstände an Sender und Empfänger des besagten Teilnehmers vorbei zum Empfänger des nächsten Teilnehmers übertragen. Auf diese Art und Weise wird also der nicht funktionstüchtige Teilnehmer "überbrückt", ohne dass dazu in die Busleitungen elektronische Schalter o.dgl. verbaut werden müssen. Der typischerweise am Eingang eines Teilnehmers vorhandene Abschlusswiderstand wird also dazu genutzt, um dem Teilnehmer, dessen Ausgang mit dem Eingang des besagten Teilnehmers verbunden ist, zu signalisieren, ob der besagte Teilnehmer defekt ist oder nicht. Ist der Abschlusswiderstand durch Schließen des Testschalters parallel zum Eingang geschaltet, verhält sich der Teilnehmer elektrisch wie ein intakter Teilnehmer; der ist mit einem "aktivierten" Abschlusswiderstand versehen. Dagegen ist der Abschlusswiderstand bei geöffnetem Testschalter elektrisch nicht aktiv. Das hat auch Vorteile bei der Kommunikation und Autoadressierung, worauf später noch eingegangen wird.

Die Dimensionierung des Abschlusswiderstandes sowie der beiden Überbrückungswiderstände des erfindungsgemäßen Teilnehmers ist so zu wählen, dass jeder funktionstüchtige Teilnehmer den typischerweise erforderlichen Leitungsabschlusswiderstand bildet und jeder nicht funktionstüchtige Teilnehmer letztendlich für funktionstüchtige Teilnehmer "nicht sichtbar" ist. Aus diesen Bedingungen ergibt sich z.B. für einen insbesondere bei LVDS-Bussystemen vorgegebenen Abschlusswiderstand von 100 Ohm, dass jeder der drei zuvor genannten Widerstände etwa 140 Ohm betragen sollte. Verallgemeinert bedeutet das, dass die Überbrückungswiderstände jeweils etwa einen Wert von etwa dem 1,4-fachen des Werts des Abschlusswiderstandes aufweisen sollten oder dass die beiden Überbrückungswiderstände und der Abschlusswiderstand etwa das 1,4-fache des Abschlusswiderstandes eines Teilnehmers aufweisen, der laut Spezifikation des verwendeten Kommunikationsbussystems keine Überbrückungswiderstände aufweist.

Die Erfindung ist insbesondere geeignet zur Anwendung bei einem LVDS-Bussystem (Low Voltage Differential Signal). Hierbei erzeugt der Busmaster durch einen differenziellen Strompuls ein differenzielles elektrisches Signal auf dem Zweidraht-Kommunikationsbus, das am Eingang des mit dem Busmaster verbundenen Teilnehmers über einen Abschlusswiderstand definierter Größe in ein differenzielles Spannungssignal umgesetzt wird. Am Ausgang des Teilnehmers erzeugt dieser wiederum ein differenzielles Stromsignal, wodurch letztendlich Daten, die durch die differenziellen Signale repräsentiert werden. von Teilnehmer zu Teilnehmer weitergegeben werden bzw. von demjenigen Teilnehmer verarbeitet werden, für den die Daten bestimmt sind.

LVDS-Bussysteme können auch beispielsweise in einem Fahrzeug für die Innenraumbeleuchtung oder für die Ambient Light Anwendung eingesetzt werden. Die Hardware für ein derartiges System ist kostengünstig und einfach konzipiert, was insbesondere für Großserienanwendungen von Vorteil ist, was bei Automotive wünschenswert ist.

In zweckmäßiger Weiterbildung der Erfindung kann vorgesehen sein,
- dass die Datenverarbeitungseinheit zur Durchführung eines Selbsttests des Teilnehmers auf Funktionstüchtigkeit ausgelegt ist und den Testschalter dann, wenn die Funktion des Teilnehmers gegeben ist, in den einen Schaltzustand überführt und/oder hält, und ansonsten in den anderen Schaltzustand überführt und/oder hält, und
- dass ein differenzielles elektrisches Signal zwischen den beiden Leitungen desjenigen Zweidrahtleitungsabschnitts, der mit dem Empfänger eines nicht funktionstüchtigen Teilnehmers verbunden ist, über die Überbrückungswiderstände dieses nicht funktionstüchtigen Teilnehmers zu dem Empfänger desjenigen Teilnehmers weiterleitbar ist, dessen Eingang mit den Leitungen desjenigen Zweidrahtleitungsabschnitts verbunden ist, an den der Sender des nicht funktionstüchtigen Teilnehmers angeschlossen ist.

Ein weiterer Aspekt der Erfindung betrifft ein Verfahren zur Datenkommunikation in einem Kommunikationsbussystem, das versehen ist mit
- einer mehrere Zweidrahtleitungsabschnitte aufweisenden Zweidrahtleitung als differenzieller Kommunikationsbus zur Verbindung mehrerer Teilnehmer in Reihenschaltung mit einem Busmaster und zur Kommunikation mittels differenzieller elektrischer Signale, wobei die Zweidrahtleitung eine erste Leitung und eine zweite Leitung aufweist und jeder Zweidrahtleitungsabschnitt einen Abschnitt der ersten Leitung und Abschnitt der zweiten Leitung umfasst,
   und
- mehreren erfindungsgemäßen Teilnehmern, wie oben beschrieben,
   wobei bei dem Verfahren
- der Sender eines nicht funktionstüchtigen Teilnehmers inaktiv geschaltet ist und ein solcher Sender kein differenzielles elektrisches Ausgangssignal ausgibt,
- der Sender des zum nicht funktionstüchtigen Teilnehmer in Richtung zum Busmaster hin und damit zum in Richtung stromauf der Reihenschaltung betrachtet nächstgelegenen funktionstüchtigen Teilnehmer über die Überbrückungswiderstände des nicht funktionstüchtigen Teilnehmers mit dem Empfänger des zum nicht funktionstüchtigen Teilnehmer in Richtung vom Busmaster weg und damit zum in Richtung stromab der Reihenschaltung betrachtet nächstgelegenen funktionstüchtigen Teilnehmer oder umgekehrt kommuniziert.

Der erfindungsgemäße Teilnehmer lässt sich unter Ergänzung seiner Hardware darüber hinaus vorteilhafterweise einsetzen für die automatische Adressvergabe im Daisy-Chain-Kommunikationsbussystem. Bei dieser Variante der Erfindung schafft diese einen Teilnehmer gemäß vorstehend genannter Art, der zusätzlich einen parallel zu den Eingangsanschlüssen des Empfängers vorgesehenen Adressierschalter (typischerweise ausgeführt als elektrischer Schalter in Form eines Transistors wie z.B. FET oder MOSFET, der ohne Ansteuerung z.B. selbstsperrend ist) aufweist, der ebenfalls von der Datenverarbeitungseinheit gesteuert wird. Der Adressierschalter ist geöffnet, solange der Teilnehmer noch keine Adresse erhalten hat, und wird geschlossen, wenn er eine Adresse erhalten hat. Nach Abschluss der Adressvergabe für sämtliche zu adressierenden Teilnehmer des Kommunikationsbussystems werden sämtliche während der Adressvergabe geschlossene Adressierschalter wieder geöffnet, wobei anzumerken ist, dass der Adressierschalter eines vor Beginn der Adressvergabe als nicht funktionstüchtig erkannte Teilnehmer seinen Adressierschalter während der gesamten Adressvergabe offen hält (wie er auch seinen Testschalter typischerweise offen hält, um zu signalisieren, dass er defekt ist).

Anders ausgedrückt also veranlasst die Datenverarbeitungseinheit das Schließen des Testschalters eines Teilnehmers, dessen Funktionstüchtigkeit gegeben ist und im Rahmen des bei der Initialisierung des Kommunikationsbussystems typischerweise durchgeführten Selbsttests erkannt wurde.

Insoweit ist es also zweckmäßig,
- dass die Datenverarbeitungseinheit zur Durchführung eines Selbsttests des Teilnehmers auf Funktionstüchtigkeit ausgelegt ist und den Testschalter dann, wenn die Funktion des Teilnehmers gegeben ist, in den einen Schaltzustand überführt und/oder hält, und ansonsten in den anderen Schaltzustand überführt und/oder hält,
   dass die Datenverarbeitungseinheit bei gegebener Funktionstüchtigkeit des Teilnehmers und bei noch nicht an den Teilnehmer vergebener Adresse den Adressierschalter zum Verbleib in dessen offenen Zustand veranlasst sowie die Adressierstromquelle des Teilnehmers zum Einspeisen eines Adressierstroms ansteuert und den Adressierschalter erst nach einer durch den Busmaster erfolgten Vergabe einer Adresse an den Teilnehmer zum Schließen veranlasst sowie nach Abschluss der Vergabe von Adressen an sämtliche funktionstüchtigen Teilnehmer zum Überführen und Verbleiben in den offenen Zustand veranlasst und
- dass die Datenverarbeitungseinheit bei nicht gegebener Funktionstüchtigkeit des Teilnehmers in der Adressvergabephase die Adressierstromquelle nicht ansteuert und den Adressierschalter zum Verbleib in dem offenen Zustand veranlasst.

Ferner wird die Erfindung im Verfahren des Anspruchs 4 definiert.

In der Anfangsphase führt also jeder Teilnehmer einen Selbsttest durch und signalisiert durch seinen z.B. nicht geschlossenen Testschalter, dass er defekt ist. Bei einer Serienschaltung aus Testschalter und Abschlusswiderstand weist er dann keinen definierten Abschlusswiderstand auf. Nach Abschluss dieser Phase erkennt also jeder Teilnehmer, ob er eventuell der letzte Teilnehmer in der Reihenschaltung ist, oder ob er eventuell stromauf eines defekten Nachbarteilnehmers, d.h. vom Busmaster aus betrachtet vor einem defekten Teilnehmer angeordnet ist oder ob er eventuell defekt ist. Während der anschließenden Adressvergabephase und danach bei der normalen Buskommunikation sind diese Informationen von Nutzen.

Bei der anschließenden Adressvergabe speisen die funktionstüchtigen, noch nicht adressierten Teilnehmer sequentiell und in der Reihenfolge stromab vom Busmaster mit dem zum Busmaster nächstliegenden Teilnehmer beginnend und durch den Busmaster ausgelöst kurzfristig einen Adressierstrom ein. Der Busmaster beginnt also mit der Einspeisung des Adressierstroms, der vom ersten Teilnehmer empfangen wird, um dann von diesem ersten Teilnehmer erneut erzeugt zu werden, und zwar für den zweiten Teilnehmer, der den Adressierstrom wiederum empfängt. Der Adressierstrom ist insoweit als Hilfsmittel zu sehen, um in jedem Adressierzyklus denjenigen Teilnehmer zu identifizieren, der als nächstes mit einer Adresse versehen wird. Jeder Teilnehmer detektiert beim Einspeisen des Adressierstroms in den Zweidraht-Kommunikationsbus über einen Detektor eine Spannung an seinem Ausgang. Diese ist unter anderem dadurch bestimmt, welcher Teilnehmer auf diesen Teilnehmer folgt (eventuell ein defekter Teilnehmer, ein bereits adressierter Teilnehmer oder aber die offene Leitung, da der betreffende Teilnehmer der letzte Teilnehmer ist). Ist die Spannung oberhalb einer oberen Schwelle, dann "sieht" der Ausgang des betreffenden Teilnehmers eine "offene" Leitung, was bedeutet, dass der besagte Teilnehmer der letzte Teilnehmer der Reihenschaltung ist. Die Autoadressierung erfolgt von "hinten nach vorne", also mit dem stromab des Busmasters am weitesten von diesem angeordneten Teilnehmer beginnend und stromaufwärts bis zum mit dem Busmaster verbundenen ersten Teilnehmer. Ein funktionstüchtiger Teilnehmer, der sich vor einem defekten Teilnehmer und damit stromauf eines defekten Teilnehmers befindet, detektiert an seinem Ausgang eine Spannung, die durch die Reihenschaltung aus mindestens zwei Überbrückungswiderständen (je nachdem, wie viele defekte Teilnehmer in der Reihenschaltung aufeinanderfolgend vorhanden sind, was im Regelfall nur ein Teilnehmer sein wird) und einem Abschlusswiderstand (nämlich dem Abschlusswiderstand des auf den letzten defekten Teilnehmer folgenden intakten Teilnehmers), so dass jeder dieser funktionstüchtigen Teilnehmer einen Spannungsabfall misst, der kleiner als die obere Schwelle ist. Jeder funktionstüchtige Teilnehmer, der in der Reihenschaltung vor einem benachbarten funktionstüchtigen Teilnehmer angeordnet ist, detektiert eine durch den Abschlusswiderstand bestimmte Spannung, die zwischen der unteren Schwelle und der oberen Schwelle liegt. Andere Spannungsabfall-Szenarien als die zuvor genannten existieren in dem ersten Adressvergabezyklus nicht. Wenn nun der Busmaster die zu vergebende erste Adresse an den ersten Teilnehmer sendet, so übernimmt dieser erste Teilnehmer die Adresse nicht sondern gibt sie an den nächsten Teilnehmer weiter usw., bis letztendlich der letzte Teilnehmer als einziger Teilnehmer diese Adresse übernimmt, weil er nämlich der einzige Teilnehmer ist, der einen Spannungsabfall von oberhalb der Schwelle misst (und kein Teilnehmer an seinem Ausgang einen Kurzschluss misst, was aber nicht mehr ab dem zweiten Zyklus gelten muss). Der letzte Teilnehmer schließt seinen Adressierschalter. Im nächsten Adressvergabezyklus ist der vor diesem Teilnehmer liegende funktionstüchtige Teilnehmer der einzige Teilnehmer ist, der an seinem Ausgang einen Kurzschluss misst, während sämtliche andere Teilnehmer einen Spannungsabfall messen, der oberhalb desjenigen eines Kurzschlusses und unterhalb desjenigen der offenen Leitung liegt. Ist im Laufe der Adressvergabezyklen ein vor einem defekten Teilnehmer angeordneter intakter Teilnehmer der in dem betreffenden Zyklus zu adressierende Teilnehmer, so erfüllt nur dieser Teilnehmer auf Grund seines gemessenen Ausgangsspannungsabfalls die Bedingung für den zu adressierenden Teilnehmer, da kein Teilnehmer einen Kurzschluss oder eine offene Leitung misst. Der Busmaster erkennt das Ende der Adressiervergabephase dadurch, dass nach dem letzten Adressvergabezyklus der mit ihm verbundene Teilnehmer seinen Adressierschalter geschlossen hat, womit auf Grund der Adressvergabevorgabe "von hinten nach vorne" kein Teilnehmer mehr existieren kann, der noch adressiert werden müsste.

Durch dieses Szenario lässt sich also schrittweise jeder funktionstüchtige Teilnehmer adressieren. Letztendlich verhält sich auch der Busmaster wie jeder Teilnehmer. Denn im letzten Adressvergabezyklus erkennt der Busmaster, dass der mit ihm direkt verbundene erste Teilnehmer der Reihenschaltung derjenige ist, der nun adressiert wird. Sendet der Busmaster danach einen weiteren Adressierstrompuls, so detektiert er an seinem Ausgang wegen des geschlossenen Adressierschalters des ersten Teilnehmers einen Kurzschluss, was ihm signalisiert, dass nun sämtliche zu adressierenden Teilnehmer adressiert sind.

Die Erfindung betrifft ferner ein Kommunikationsbussystem mit Datenübertragung durch differenzielle elektrische Signale, mit
- einem Busmaster,
- einer mehrere Zweidrahtleitungsabschnitte aufweisenden Zweidrahtleitung als differenzieller Kommunikationsbus zur Verbindung mehrerer Teilnehmer in Reihenschaltung mit dem Busmaster und
- mehreren Teilnehmern, wie oben beschrieben.

Mit der Erfindung wird gemäß einer Variante ferner vorgeschlagen ein Teilnehmer für ein Kommunikationsbussystem mit einer mehrere Zweidrahtleitungsabschnitte aufweisenden Zweidrahtleitung als differenzieller Kommunikationsbus zur Verbindung mehrerer Teilnehmer in Form einer Reihenschaltung mit einem Busmaster und zur Kommunikation mittels differenzieller Spannungssignale, wobei die Zweidrahtleitung eine erste Leitung und eine zweite Leitung aufweist und jeder Zweidrahtleitungsabschnitt einen Abschnitt der ersten Leitung und Abschnitt der zweiten Leitung umfasst, mit
- einem Empfänger mit zwei Eingangsanschlüssen, von denen jeder mit einer anderen der beiden Leitungen eines ersten Zweidrahtleitungsabschnitts verbindbar ist, wobei der Empfänger für den Empfang von differenziellen Spannungssignalen auf dem ersten Zweidrahtleitungsabschnitt vorgesehen oder ausgebildet und/oder eingerichtet ist,
- einem Sender mit zwei Ausgangsanschlüssen, von denen jeder mit einem anderen der beiden Leitungen eines zweiten Zweidrahtleitungsabschnitts verbindbar ist, wobei der Sender für das Senden von differenziellen Spannungssignalen über den zweiten Zweidrahtleitungsabschnitt vorgesehen oder ausgebildet und/oder eingerichtet ist,
- einer Daten- und/oder Signalverarbeitungseinheit,
- einer mit den beiden Leitungen (des ersten Zweidrahtleitungsabschnitts verbundenen und damit parallel zu den Eingangsanschlüssen des Empfängers angeordneten Abschlusswiderstand,
- einem ebenfalls mit den beiden Leitungen des ersten Zweidrahtleitungsabschnitts verbundenen und damit ebenfalls parallel zu den Eingangsanschlüssen des Empfängers angeordneten, von der Daten- und/oder Signalverarbeitungseinheit gesteuert zwischen einem Ausschaltzustand und einem Einschaltzustand umschaltbaren und je nach Bedarf in dem jeweiligen Zustand haltenden Adressierschalter, wobei der Adressierschalter in einer Adressvergabephase von der Daten- und/oder Signalverarbeitungseinheit gesteuert bei einer Adressvergabe von einem Ausschaltzustand in einen Einschaltzustand überführbar ist, und zwar ab oder nach dem Zeitpunkt, ab dem dem Teilnehmer von dem Busmaster eine Adresse zugewiesen worden ist, bis zum Ende der Adressvergabephase, wobei der Adressierschalter von der Daten- und/oder Signalverarbeitungseinheit gesteuert und danach wieder in den Ausschaltzustand überführbar ist,
- einer von der Daten- und/oder Signalverarbeitungseinheit gesteuerten Adressierstromquelle zum Einspeisen eines Adressierstroms in eine der beiden Leitungen des zweiten Zweidrahtleitungsabschnitts,
- einem mit der Daten- und/oder Signalverarbeitungseinheit verbundenen Detektor zur Erkennung eines Spannungsabfalls zwischen den Ausgangsanschlüssen des Senders sowie zur Erkennung, in welchem von mehreren Detektionsbereichen dieser Spannungsabfall liegt,
- einem ersten Überbrückungswiderstand zwischen demjenigen Eingangsanschluss des Empfängers, der mit der ersten Leitung des ersten Zweidrahtleitungsabschnitts zu verbinden ist, und demjenigen Ausgangsanschluss des Senders, der mit der ersten Leitung des zweiten Zweidrahtleitungsabschnitts zu verbinden ist, und
- einem zweiten Überbrückungswiderstand zwischen demjenigen Eingangsanschluss des Empfängers, der mit der zweiten Leitung des ersten Zweidrahtleitungsabschnitts zu verbinden ist, und demjenigen Ausgangsanschluss des Senders, der mit der zweiten Leitung des zweiten Zweidrahtleitungsabschnitts zu verbinden ist, wobei die beiden Überbrückungswiderstände in der Autoadressierphase benötigt werden, und zwar um in der ersten Phase des Adressiervergabeverfahrens, in der noch keine Adresse vergeben worden ist, den letzten Teilnehmer der Reihenschaltung von Teilnehmern von allen anderen Teilnehmern dadurch unterscheiden zu können, dass dieser letzte Teilnehmer einen weitaus größeren Spannungsabfall an seinem Ausgang detektiert (nämlich wesentlich größer als durch seine beiden Überbrückungswiderstände und seinen Abschlusswiderstand definiert) als alle anderen Teilnehmer, die einen Spannungsabfall detektieren, der durch den Abschlusswiderstand des stromab nächsten Teilnehmers und dessen Überbrückungswiderstände definiert ist. Würde man keine Überbrückungswiderstände haben, so würden wiederum sämtliche Teilnehmer bis auf den letzten Teilnehmer den gerade definierten Abschlusswiderstand detektieren, wobei dieser letzte Teilnehmer einen an sich nicht definierten Spannungsabfall misst, da der von ihm am Ausgang eingespeiste Strom kann nicht weiter stromab des Zweidraht-Kommunikationsbusses fließen kann, sondern stromauf über die beiden Überbrückungswiderstände und den zwischen diesen angeordneten Abschlusswiderstand fließt, durch den im Übrigen auch der Adressierstrom des vorletzten Teilnehmers fließt, so dass sich insgesamt ein recht hoher Spannungsabfall am Ausgang des letzten Teilnehmers einstellt, der die "offene Leitung" signalisiert,
- wobei die Daten- und/oder Signalverarbeitungseinheit innerhalb eines Adressierzyklus zur Vergabe einer Adresse an den Teilnehmer dessen Adressierstromquelle aktiviert und dessen Adressierschalter im Ausschaltzustand hält, bis dem Teilnehmer eine Adresse zugewiesen ist,
- wobei die Daten- und/oder Signalverarbeitungseinheit die Adressierstromquelle eines innerhalb eines Adressierzyklus adressierten Teilnehmers deaktiviert und den Adressierschalter schließt,
- wobei für den Fall, dass mit den Ausgangsanschlüssen des Teilnehmers kein anderer Teilnehmer verbunden ist und somit der Teilnehmer der letzte Teilnehmer der Reihenschaltung von Teilnehmern ist, der Detektor eine Spannung innerhalb eines ersten Spannungsbereichs detektiert, der größer ist als ein erster Schwellwert, deren Größe im Wesentlichen durch die Widerstandwerte seiner beiden Überbrückungswiderstände und den Widerstandswert seines Abschlusswiderstands und die Größe des Adressierstroms seiner Adressierstromquelle sowie den Spannungsabfall auf Grund des durch seinen Abschlusswiderstand fließenden Adressierstroms der Adressierstromquelle des vor dem Teilnehmer befindlichen Teilnehmers bestimmt ist, wobei diese Spannung größer ist als ein erster Schwellwert,
- wobei für den Fall, dass mit den Ausganganschlüssen des Teilnehmers ein anderer Teilnehmer verbunden ist, der noch keine Adresse aufweist und dessen Adressierschalter sich somit im Ausschaltzustand befindet, der Detektor eine Spannung innerhalb eines zweiten Spannungsbereichs detektiert, der im Bereich zwischen dem ersten Schwellwert und einem zweiten Schwellwert liegt, welcher kleiner ist als der erste Schwellwert, und detektiert, deren Größe im Wesentlichen durch den Abschlusswiderstand des anderen Teilnehmers und die Größe des Adressierstroms seiner Adressierstromquelle bestimmt ist, wobei diese Spannung kleiner ist als der erste Schwellwert und größer ist als eine zweiter Schwellwert, der seinerseits kleiner ist als der erste Schwellwert,
- wobei für den Fall, dass mit den Ausgangsanschlüssen des Teilnehmers ein anderer Teilnehmer verbunden ist, der bereits eine Adresse aufweist und dessen Adressierschalter sich somit im Einschaltzustand befindet, der Detektor eine Spannung innerhalb eines dritten Spannungsbereichs detektiert, der zwischen 0 Volt und einem dritten Schwellwert liegt, welcher kleiner ist als der zweite Schwellwert, detektiert, die kleiner als ein dritter Schwellwert ist und kleiner als der zweite Schwellwert ist.

Ein Wesensmerkmal des erfindungsgemäßen Teilnehmers gemäß dieser Variante sind seine beiden Überbrückungswiderstände, die zunächst einmal für die Autoadressierung vorgesehen sind. Sie dienen in erster Linie nicht der Übertragung der Spannungsdifferenzsignale, die über den differenziellen Zweidraht-Kommunikationsbus übertragen werden. Diese Übertragung erfolgt vielmehr über jeweils den Empfänger eines Teilnehmers, der die Signale intern an seinen Sender weitergibt, um sie im Bedarfsfalle auch noch selbst zu verarbeiten, sofern die Adressinformation besagt, dass der diese Adresse aufweisende Teilnehmer eine Aktion ausführen soll (beispielsweise Einstellung der Farbe und Helligkeit von LED-Leuchtmitteleinheiten, sofern die Applikation des Kommunikationsbusses die Ansteuerung derartiger LED-Leuchtmitteleinheiten betrifft).

Jeder Teilnehmer weist einen Spannungsdetektor auf, der als Fensterdiskriminator ausgebildet ist. Je nachdem, ob in der Adressvergabephase erkannt worden ist, dass der nächste zu adressierende Teilnehmer der letzte Teilnehmer der Reihenschaltung von Teilnehmern ist, detektiert dieser Teilnehmer mittels seines Detektors eine andere Spannung als sämtliche anderen Teilnehmer. Je nachdem, ob sich ein Teilnehmer stromauf vor einem bereits adressierten Teilnehmer befindet, detektiert der Detektor dieses Teilnehmers eine andere Spannung als alle anderen Teilnehmer, die noch adressiert werden müssen. Jeder adressierte Teilnehmer schließt seinen Adressierschalter und deaktiviert seine Adressierstromquelle, nimmt damit also an dem weiteren Adressvergabeverfahren nicht mehr teil.

Die einzelnen unterschiedlichen Spannungsbereiche, innerhalb derer die Ausgangsspannungen bei Einspeisung der Adressierströme liegen, überlappen sich vorteilhafterweise nicht, sind also wertmäßig voneinander zu unterscheiden. Die Übernahme einer vom Busmaster über den Zweidraht-Kommunikationsbus gesendeten Adresse übernimmt derjenige Teilnehmer, der entweder eine Spannung im ersten wertmäßig großen Spannungsbereich aufweist (letzter Teilnehmer der Reihenschaltung von Teilnehmern) oder derjenige Teilnehmer, der im Wesentlichen einen Kurzschluss detektiert (also eine Spannung im dritten Spannungsbereich detektiert). Pro Adressvergabezyklus existiert immer nur ein einziger Teilnehmer, der eine dieser Bedingungen erfüllt. Im ersten Adressvergabezyklus ist es als einziger der letzte Teilnehmer der Reihenschaltung von Teilnehmern, der eine Spannung im ersten Spannungsbereich detektiert. Danach wird immer derjenige Teilnehmer mit einer Adresse versehen, der eine Spannung im dritten Spannungsbereich detektiert. Sämtliche anderen noch nicht adressierten Teilnehmer detektieren jeweils eine Spannung im zweiten Spannungsbereich.

Durch Adressierschalter und die Überbrückungswiderstände ist es möglich, die Teilnehmer eines differenziellen Zweidraht-Kommunikationsbusses automatisch zu adressieren. Die Dimensionierung der Überbrückungswiderstände ist so zu wählen, dass sich der Eingangswiderstand jedes Teilnehmers größenmäßig so verhält, wie es die Spezifikation des betreffenden Bussystems für den Abschlusswiderstand fordert.

Von Vorteil ist es, wenn beispielsweise im Vorfeld der Adressvergabe überprüft werden könnte, ob die Teilnehmer funktionstüchtig sind oder nicht. Es wäre also zweckmäßig, wenn die Teilnehmer sozusagen einen Selbsttest durchführen könnten, wobei es weiterhin von Vorteil ist, wenn funktionsuntüchtige Teilnehmer sich dementsprechend identifizieren können und weder am automatischen Adressvergabeverfahren noch im Betrieb des Kommunikationsbussystems teilnehmen, was dadurch realisiert werden kann, dass Signale nicht mehr über Eingang und Ausgang eines defekten Teilnehmers übertragen werden sondern über ihre Überbrückungswiderstände.

Ein Teilnehmer, der die zuvor genannten Vorgaben erfüllt, ist gemäß einer Weiterbildung der Erfindung gekennzeichnet durch
- einen Testschalter, der zwischen den Abschlusswiderstand und einen der beiden Eingangsanschlüsse geschaltet ist und von der Daten- und/oder Signalverarbeitungseinheit wahlweise in einen Einschaltzustand oder in einen Ausschaltzustand bringbar und in dem jeweiligen Zustand beibehaltbar ist,
- wobei die Daten- und/oder Signalverarbeitungseinheit zur Durchführung eines Selbsttests des Teilnehmers auf Funktionstüchtigkeit ausgelegt ist und den Testschalter dann, wenn die Funktionstüchtigkeit des Teilnehmers gegeben ist, in den Einschaltzustand überführt und in diesem Zustand hält und bei Nicht-Funktionstüchtigkeit des Teilnehmers dessen Testschalter in den Ausschaltzustand überführt und in diesem Zustand hält, wobei in diesem Fall die beiden Überbrückungswiderstände zusätzlich für die Weiterleitung von auf dem ersten Zweidrahtleitungsabschnitt befindlichen differenziellen Spannungssignalen an den zweiten Zweidrahtleitungsabschnitt vorgesehen und/oder ausgebildet und eingerichtet sind,
- wobei für den Fall, dass mit den Ausgangsanschlüssen (45) eines funktionstüchtigen Teilnehmers kein anderer Teilnehmer verbunden ist und somit der Teilnehmer der letzte Teilnehmer der Reihenschaltung von Teilnehmern ist, der Detektor (44) eine Spannung innerhalb eines ersten Spannungsbereichs detektiert, der größer ist als ein erster Schwellwert, wobei die Größe der detektierten Spannung im Wesentlichen durch die Widerstandwerte seiner beiden Überbrückungswiderstände und den Widerstandswert seines Abschlusswiderstands und die Größe des Adressierstroms seiner Adressierstromquelle sowie den Spannungsabfall auf Grund des durch seinen Abschlusswiderstand fließenden Adressierstroms der Adressierstromquelle des vor dem Teilnehmer befindlichen Teilnehmers bestimmt ist, wobei diese Spannung größer ist als ein erster Schwellwert,
- wobei für den Fall, dass mit den Ausganganschlüssen eines funktionstüchtigen Teilnehmers ein funktionstüchtiger anderer Teilnehmer verbunden ist, dessen Testschalter sich im Einschaltzustand befindet und der noch keine Adresse aufweist und dessen Adressierschalter sich somit im Ausschaltzustand befindet, der Detektor eine Spannung innerhalb eines zweiten Spannungsbereichs detektiert, der im Bereich zwischen dem ersten Schwellwert und einem zweiten Schwellwert liegt, welcher kleiner ist als der erste Schwellwert, wobei die Größe der detektierten Spannung im Wesentlichen durch den Abschlusswiderstand des funktionstüchtigen anderen Teilnehmers und die Größe des Adressierstroms der Adressierstromquelle des Teilnehmers bestimmt ist, wobei diese Spannung kleiner ist als der erste Schwellwert und größer ist als eine zweiter Schwellwert, der seinerseits kleiner ist als der erste Schwellwert,
- wobei für den Fall, dass mit den Ausgangsanschlüssen eines funktionstüchtigen Teilnehmers ein funktionstüchtiger anderer Teilnehmer verbunden ist, dessen Testschalter sich im Einschaltzustand befindet und der bereits eine Adresse aufweist und dessen Adressierschalter sich somit im Einschaltzustand befindet, der Detektor eine Spannung innerhalb eines dritten Spannungsbereichs detektiert, der im Bereich zwischen 0 Volt und einem dritten Schwellwert liegt, welcher kleiner ist als der zweite Schwellwert,
- wobei für den Fall, dass mit den Ausgangsanschlüssen eines funktionstüchtigen Teilnehmers ein nicht-funktionstüchtiger anderer Teilnehmer verbunden ist, dessen Testschalter und dessen Adressierschalter sich jeweils im Ausschaltzustand befinden und mit dessen Ausgangsanschlüssen kein weiterer Teilnehmer verbunden ist, der Detektor eine Spannung innerhalb des ersten Spannungsbereichs detektiert,
- wobei für den Fall, dass mit den Ausgangsanschlüssen eines funktionstüchtigen Teilnehmers ein nicht-funktionstüchtiger anderer Teilnehmer verbunden ist, dessen Testschalter und dessen Adressierschalter sich jeweils im Ausschaltzustand befinden und mit dessen Ausgangsanschlüssen ein funktionstüchtiger weiterer Teilnehmer verbunden ist, dessen Testschalter sich im Einschaltzustand befindet und der aber bereits adressiert ist und dessen Adressierschalter sich somit im Einschaltzustand befindet, der Detektor eine Spannung innerhalb eines vierten Spannungsbereichs detektiert, der im Bereich zwischen einem vierten Schwellwert, welcher oberhalb des zweiten Spannungsbereichs liegt, und einem fünften Schwellwert liegt, der kleiner ist als der erste Schwellwert, wobei die Größe der detektierten Spannung im Wesentlichen durch die Widerstandswerte der beiden Überbrückungswiderstände des anderen nicht-funktionstüchtigen anderen Teilnehmers und durch die Größe des Adressierstroms der Adressierstromquelle des Teilnehmers bestimmt ist, wobei diese Spannung größer als der vierte Schwellwert und kleiner als der zweite Schwellwert ist,
- wobei für den Fall, dass mit den Ausgangsanschlüssen eines funktionstüchtigen Teilnehmers ein nicht-funktionstüchtiger anderer Teilnehmer verbunden ist, dessen Testschalter und dessen Adressierschalter sich jeweils im Ausschaltzustand befinden und mit dessen Ausgangsanschlüssen ein funktionstüchtiger weiterer Teilnehmer verbunden ist, dessen Testschalter sich also im Einschaltzustand befindet und der aber noch nicht adressiert ist und dessen Adressierschalter sich somit im Ausschaltzustand befindet, der Detektor eine Spannung innerhalb eines fünften Spannungsbereichs detektiert, der im Bereich zwischen dem fünften Schwellwert und dem ersten Schwellwert liegt, wobei die Größe der detektierten Spannung im Wesentlichen durch die Widerstandswerte der beiden Überbrückungswiderstände des anderen Teilnehmers sowie durch den Widerstandswert des Abschlusswiderstands des weiteren funktionstüchtigen Teilnehmers und die Größe des Adressierstroms seiner Adressierstromquelle bestimmt ist, wobei diese Spannung größer als der zweite Schwellwert und kleiner als ein vierter Schwellwert ist, der seinerseits kleiner als der erste Schwellwert und größer als der zweite Schwellwert ist.

Bei dieser Weiterbildung der Erfindung weist jeder Teilnehmer in Reihe zu seinem Abschlusswiderstand einen Testschalter auf, wobei die Reihenschaltung aus Abschlusswiderstand und Testschalter parallel zu den Eingangsanschlüssen des Teilnehmers angeordnet ist. Ein intakter Teilnehmer hat einen geschlossenen Testschalter und signalisiert dadurch, dass er intakt ist.

Bei der automatischen Vergabe von Adressen detektieren die Detektoren der Teilnehmer nun auch Spannungen, die in weiteren zusätzlichen Spannungsbereichen liegen. Hierbei sind die Fälle zu unterscheiden, dass ein intakter Teilnehmer vor einem defekten Teilnehmer angeordnet ist und sich hinter dem defekten Teilnehmer ein bereits adressierter Teilnehmer befindet. Der vor dem defekten Teilnehmer angeordnete Teilnehmer detektiert nun eine Spannung in einem vierten Spannungsbereich. Ist der hinter dem defekten Teilnehmer angeordnete Teilnehmer bereits adressiert (sein Adressierschalter ist geschlossen), so detektiert der vor dem defekten Teilnehmer befindliche funktionstüchtige Teilnehmer eine Spannung, die in einem fünften Spannungsbereich liegt.

Das bedeutet, dass bei der späteren Adressvergabe auch ein Teilnehmer existiert, der der nächste zu adressierende Teilnehmer ist und der vor einem defekten Teilnehmer angeordnet ist. Also übernimmt in der Adressierphase jeweils derjenige einzige Teilnehmer als nächster zu adressierender Teilnehmer die vom Busmaster gesendete Adresse, wenn er eine Spannung entweder innerhalb des ersten Spannungsbereichs oder innerhalb des dritten Spannungsbereichs oder innerhalb des vierten Spannungsbereichs detektiert. Von diesem "Typ" von Teilnehmer existiert pro Adressvergabezyklus immer genau ein Teilnehmer. Damit kann die Adresse, die der Busmaster sendet, genau einem Teilnehmer zugewiesen werden. Es kommt insoweit also zu keinem Zeitpunkt zu einem "Konflikt".

Die Erfindung betrifft ferner ein Kommunikationsbussystem mit Datenübertragung durch differenzielle Spannungssignale mit
- einem Busmaster,
- einer mehrere Zweidrahtleitungsabschnitte aufweisenden Zweidrahtleitung als differenzieller Kommunikationsbus zur Verbindung mehrerer Teilnehmer in Reihenschaltung mit dem Busmaster und
- mehreren Teilnehmern gemäß Ausgestaltung wie oben beschrieben, wobei sämtliche Teilnehmer funktionstüchtig sind und einen Selbsttest durchführen können oder aber sämtliche Teilnehmer einen Selbsttest durchführen können und dabei mindestens ein Teilnehmer als funktionsuntüchtig erkannt wird.

Ferner betrifft die Erfindung ein Verfahren zur Signalisierung seitens der Teilnehmer eines Kommunikationsbussystems gemäß zuvor beschriebener Ausgestaltung für eine automatische Adressvergabe an die Teilnehmer des Kommunikationsbussystems dahingehend, ob die Teilnehmer funktionstüchtig sind oder nicht, und für einen zum sich daran anschließenden Betrieb des Kommunikationsbussystems, wobei die Teilnehmer funktionstüchtig sind oder nicht, wobei bei dem Verfahren eine Selbsttestphase durchgeführt wird, indem
- auf einen Befehl des Busmasters hin jeder Teilnehmer einen Selbsttest auf Funktionstüchtigkeit durchführt und die Daten- und/oder Signalverarbeitungseinheit jedes Teilnehmers dessen Testschalter nur dann in den Einschaltzustand überführt und in diesem Zustand hält, wenn die Funktionstüchtigkeit des Teilnehmers gegeben ist,
- wobei der sich im Ausschaltzustand befindende Testschalter eines Teilnehmers signalisiert, dass der betreffende Teilnehmer nicht funktionstüchtig ist, und
- wobei der sich im Einschaltzustand befindende Testschalter eines Teilnehmers signalisiert, dass der betreffende Teilnehmer funktionstüchtig ist.

Die Erfindung betrifft ferner ein Verfahren zur Vergabe von Adressen an funktionstüchtige Teilnehmer eines Kommunikationsbussystems gemäß zuvor beschriebener Ausgestaltung, wobei bei dem Verfahren
- eine Selbsttestphase wie zuvor beschrieben durchgeführt wird,
- während der Durchführung der Selbsttestphase die Adressierschalter sämtlicher Teilnehmer sich im Ausschaltzustand befinden,
- in einer Vorphase vor Vergabe von Adressen an die funktionstüchtigen Teilnehmer der Adressierschalter jedes funktionstüchtigen Teilnehmers sich der Adressierschalter jedes funktionstüchtigen Teilnehmers im Ausschaltzustand befindet, und die Adressierstromquellen sämtlicher funktionstüchtiger Teilnehmer ihren Adressierstrom in eine der Leitungen des Zweidraht-Kommunikationsbus einspeisen und sich dabei derjenigen Teilnehmer als letzter in der Reihenschaltung von Teilnehmern angeordnete, funktionstüchtige Teilnehmer identifiziert, indem sein Detektor eine Spannung innerhalb des ersten Spannungsbereichs detektiert, und sich ferner diejenigen funktionstüchtigen Teilnehmer, die stromauf des Zweidraht-Kommunikationsbus benachbart zu einem nicht-funktionstüchtigen Teilnehmer und damit jeweils näher zum Busmaster angeordnet sind als der betreffende nicht-funktionstüchtige Teilnehmer, identifizieren, indem der Detektor jedes dieser funktionstüchtigen Teilnehmer eine Spannung innerhalb des fünften Spannungsbereichs detektiert, und die Adressierstromeinspeisung nach der Identifizierung der genannten Teilnehmer beendet wird,
- die Vergabe von Adressen an die funktionstüchtigen Teilnehmer in mehreren Adressvergabezyklen erfolgt, wobei pro Adressvergabezyklus ein einziger der noch nicht adressierten funktionstüchtigen Teilnehmer identifiziert und diesen Teilnehmer von dem Busmaster eine Adresse zugeordnet wird, indem ausschließlich derjenige funktionstüchtige Teilnehmer die vom Busmaster über den Zweidraht-Kommunikationsbus versendete Adresse als seine Adresse annimmt, dessen Detektor eine Spannung entweder innerhalb des ersten Spannungsbereichs oder innerhalb des dritten Spannungsbereichs oder innerhalb des vierten Spannungsbereichs detektiert, wobei lediglich jeder der funktionstüchtigen Teilnehmer, der in der Reihenschaltung von Teilnehmern stromauf benachbart zu einem nicht-funktionstüchtigen Teilnehmer angeordnet ist, eine von dem Busmaster über den Zweidraht-Kommunikationsbus versendete Adresse als seine Adresse annimmt, wenn der Detektor dieses funktionstüchtigen Teilnehmers eine Spannung innerhalb des vierten Spannungsbereichs detektiert,
- in einem ersten Adressvergabezyklus
   - der Busmaster über den Zweidraht-Kommunikationsbus Adressdaten versendet, die derjenige funktionstüchtige Teilnehmer als seine Adresse annimmt, der in der Vorphase als in der Reihenschaltung von Teilnehmern als letzter angeordnete Teilnehmer identifiziert worden ist, da er als einziger funktionstüchtiger Teilnehmer mittels seines Detektors eine Spannung innerhalb des ersten Spannungsbereichs detektiert, und
   - die Daten- und/oder Signalverarbeitungseinheit des so adressierten Teilnehmers dessen Adressierschalter in den Einschaltzustand überführt,
- in jedem weiteren Adressierzyklus
   - von den Adressierstromquellen der noch nicht adressierten, funktionstüchtigen Teilnehmer ein Adressierstrom in eine der Leitungen des Zweidraht-Kommunikationsbus eingespeist wird,
   - der in der Reihenschaltung von Teilnehmern als letzter der noch nicht adressierten, funktionstüchtigen Teilnehmer angeordnete funktionstüchtige Teilnehmer, der eventuell benachbart zu einem stromab des Zweidraht-Kommunikationsbus und damit vom Busmaster weiter entfernt liegenden, nicht-funktionstüchtigen Teilnehmer angeordnet ist, durch seinen Detektor als einziger funktionstüchtiger Teilnehmer eine Spannung innerhalb des dritten Spannungsbereichs oder innerhalb des vierten Spannungsbereichs detektiert und als nächster zu adressierender, funktionstüchtiger Teilnehmer identifiziert wird,
   - dieser Teilnehmer sowie sämtliche anderen, noch nicht adressierten, funktionstüchtigen Teilnehmer ihre Adressierstromeinspeisung beenden,
   - der Busmaster über den Zweidraht-Kommunikationsbus Adressdaten versendet, die der in dem betreffenden Adressiervergabezyklus identifizierte Teilnehmer als seine Adresse annimmt,
   - die Daten- und/oder Signalverarbeitungseinheit des so adressierten, funktionstüchtigen Teilnehmers dessen Adressierschalter in den Einschaltzustand überführt, und
- die Adressierschalter sämtlicher funktionstüchtiger adressierter Teilnehmer geöffnet werden und die Adressierschalter der nicht-funktionstüchtigen Teilnehmer geöffnet bleiben, wenn sämtliche funktionstüchtigen Teilnehmer der Reihenschaltung aus Teilnehmern mit einer Adresse versehen sind.

Die Erfindung wird nachfolgend anhand eines Ausführungsbeispiels sowie unter Bezugnahme auf die Zeichnung näher erläutert. Im Einzelnen zeigen dabei:
- Fig. 1: eine Blockschaltbilddarstellung der für die Erfindung wesentlichen alternativen Komponenten eines Teilnehmers gemäß einem ersten Ausführungsbeispiel der Erfindung,
- Fig. 2: eine Erweiterung der Konzeption des Teilnehmers gemäß Fig. 1 zur Verwendung des Teilnehmers in einem Daisy-Chain-Kommunikationsbussystem mit automatischer Adressvergabe und
- Fig. 3: eine grafische Darstellung der verschiedenen Spannungsbereiche, die der Detektor eines Teilnehmers in Abhängigkeit von seiner Anordnung in der Reihenschaltung und in Abhängigkeit von der Beschaffenheit seiner Nachbarn (intakt oder funktionsuntüchtig) in der Selbsttestphase, in dem ersten Adressvergabezyklus und in jedem weiteren Adressvergabezyklus detektiert,
- Fign. 4 bis 10: die verschiedenen Stadien mit entsprechenden Schaltzuständen der Test- und Adressierschalter mehrerer Teilnehmer eines Daisy-Chain-Kommunikationsbussystems in der Adressierphase und unter der Annahme, dass mindestens einer der Teilnehmer defekt ist.

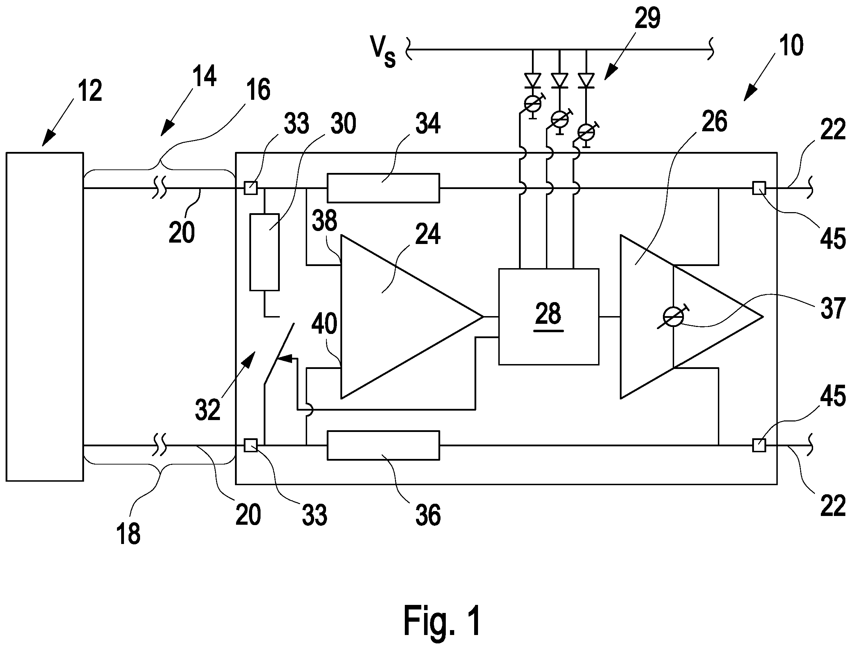

In Fig. 1 ist ein Ausführungsbeispiel eines erfindungsgemäßen Teilnehmers gezeigt, der als einer von einer Vielzahl von beispielsweise bis zu mehreren hundert Teilnehmern in einem Daisy-Chain-Bussystem angeordnet ist. In Fig. 1 ist nur einer dieser Teilnehmer 10 gezeigt und darüber hinaus noch der Busmaster 12. Der Zweidraht-Kommunikationsbus 14 weist eine erste Leitung 16 sowie eine zweite Leitung 18 auf. Einzelne Zweidrahtleitungsabschnitte 20, 22 dieses Zweidraht-Kommunikationsbus 14 führen zu dem Teilnehmer 10 und von diesem weiter zum nächsten Teilnehmer der Reihenschaltung von Teilnehmern usw.

Der Teilnehmer 10 weist einen Empfänger 24 für auf dem Zweidraht-Kommunikationsbus 14 übertragene differenzielle elektrische Signale sowie einen Sender 26 auf, um Stromdifferenzsignale über den Zweidraht-Kommunikationsbus 14 an einen nachfolgenden Teilnehmer zu senden. Die von dem Empfänger 24 eines Teilnehmers 10 empfangenen Signale werden in einer Datenverarbeitungseinheit 28 verarbeitet, sofern sie für die von dem Teilnehmer 10 zu steuernde Applikation bestimmt sind. Bei dieser Applikation handelt es sich in diesem Beispielfall um eine RGB-Leuchtmitteleinheit 29 einer Lichterkette. Die Leuchtmittel werden über steuerbare Stromquellen angesteuert, die zusammen mit den Leuchtmitteln zwischen V_{S} und Masse geschaltet sind.

Die Besonderheit des Teilnehmers 10 ist in der Anordnung von drei Widerständen zu sehen, von denen einer als Abschlusswiderstand 30 in Reihe mit einem Testschalter 32 verschaltet ist und diese Reihenschaltung zwischen den beiden Leitungen 20,22 des Zweidrahtkommunikationsbus 14 am Empfänger 24 und damit zwischen den Eingangsanschlüssen 33 geschaltet ist. Bei den beiden anderen Widerständen handelt es sich um zusätzliche Widerstände, die als erste und zweite Überbrückungswiderstände 34,36 in jeder der beiden Leitungen 16,18 des Zweidraht-Kommunikationsbus 14 verschaltet sind. So ist der erste Überbrückungswiderstand 34 mit dem einen der beiden Zweidrahtleitungsabschnitte 20, der zu dem Teilnehmer 10 führt, sowie mit dem einen der beiden Zweitdrahtleitungsabschnitte 22, der zum nächsten Teilnehmer führt, verbunden, während der zweite Überbrückungswiderstand 36 zwischen dem anderen der beiden Zweidrahtleitungsabschnitte 20, der zum Teilnehmer 10 führt, und dem anderen der beiden Zweidrahtleitungsabschnitte 22, der von dem Teilnehmer 10 zum nächsten Teilnehmer führt, verbunden ist.

Die Datenverarbeitungseinheit 28 führt unter anderem auch einen Selbsttest des Teilnehmers 10 auf Funktionstüchtigkeit durch. Mit Hilfe dieses Selbsttests werden die Funktionen des Teilnehmers 10 überprüft. Wenn die Funktionstüchtigkeit des Teilnehmers 10 festgestellt wird, so wird der bis dahin offene Testschalter 32 geschlossen. Dies gilt für die Initialisierung des Kommunikationsbussystems beispielsweise nach oder bei dem Starten eines Fahrzeugs. Aber auch im Betrieb des Kommunikationsbussystems können derartige Selbsttests durchgeführt werden, so dass dann der geschlossene Testschalter 32 des Teilnehmers geöffnet wird, wenn durch den Selbsttest festgestellt wird, dass die Funktionstüchtigkeit des Teilnehmers 10 nicht mehr gegeben ist.

Der Sender 26 des Teilnehmers 10 weist eine Stromquelle 37 auf, die zur Übertragung von binären Signalen differenzielle Strompulse auf die beiden Zweidrahtleitungsabschnitte 20, 22 gibt, indem Strom aus dem einen Zweidrahtleitungsabschnitt entnommen und in den anderen Zweidrahtleitungsabschnitt eingespeist wird oder in dem umgekehrt Strom in den einen Zweidrahtleitungsabschnitt eingespeist und aus dem anderen entnommen wird, und diese differenziellen Strompulse über diese Zweidrahtleitungsabschnitte 20, 22 an den Empfänger 24 eines benachbarten Teilnehmers sendet, wo sie über dem Abschlusswiderstand 30 in differenzielle Spannungssignale umgesetzt und von einem Komparator (nicht gezeigt) des Senders 24 erkannt werden.

Bei geschlossenem Testschalter 32 werden die zwischen den beiden Eingangsanschlüssen 38,40 des Empfängers 24 anliegenden differenziellen Spannungssignale von der Datenverarbeitungseinheit 28 verarbeitet und/oder an den Sender 26 weitergeleitet. Dies erfolgt nicht, wenn der Testschalter 32 geöffnet ist. Die Weitergabe der differenziellen Spannungssignale vom vor dem Teilnehmer 10 liegenden Teilnehmer erfolgt dann über die Überbrückungswiderstände 34,36 und damit insoweit an dem defekten Teilnehmer 10 vorbei zum nächsten Teilnehmer.

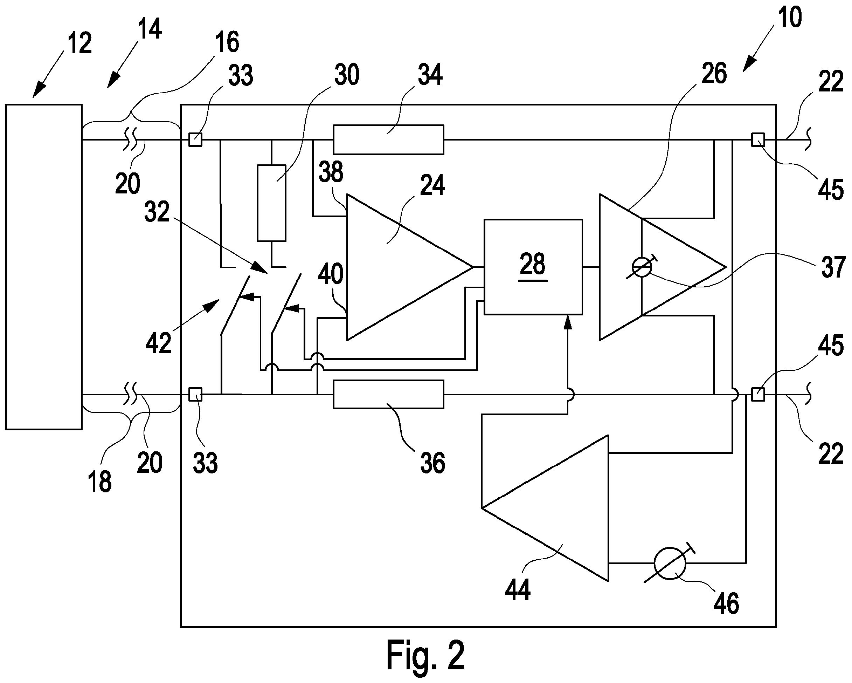

Eine Ergänzung der Hardware des Teilnehmers 10 gemäß Fig. 1 zur automatischen Vergabe von Adressen an die Teilnehmer des Daisy-Chain-Bussystems zeigt Fig. 2. Hierbei ist anzumerken, dass in Fig. 2 (und auch in den nachfolgend noch zu beschreibenden Figuren) die lichttechnische Applikation, die in Fig. 1 gezeigt ist, nicht mehr dargestellt ist.

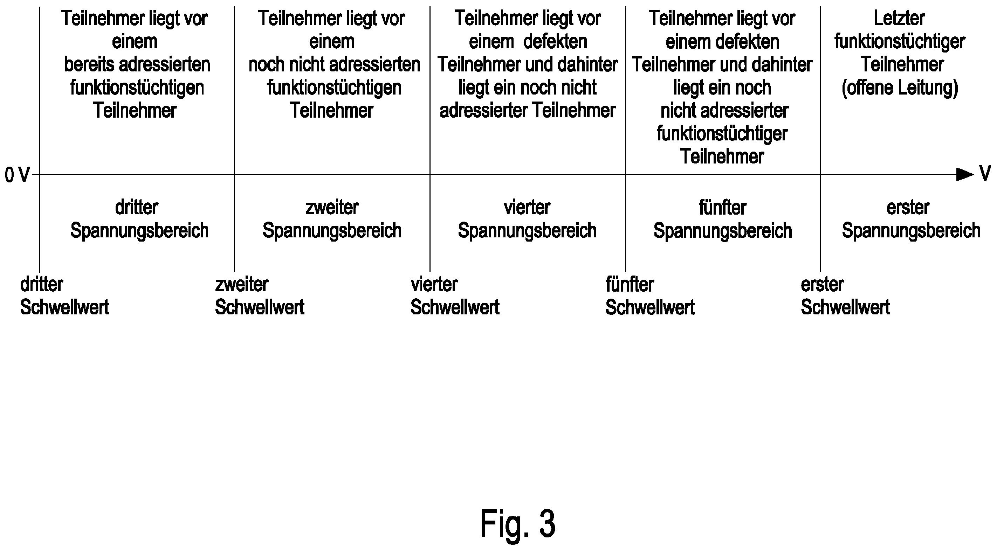

Die für die automatische Adressvergabe wesentlichen zusätzlichen Komponenten des Teilnehmers 10' der Fig. 2 gegenüber denjenigen des Teilnehmers 10 nach Fig. 1 beziehen sich auf einen Adressierschalter 42, der parallel zur Reihenschaltung aus dem Abschlusswiderstand und dem Testschalter 32 zwischen den beiden zum Teilnehmer 10' führenden Zweidrahtleitungsabschnitten 20,22 geschaltet ist, und auf einen als Komparator ausgeführten Detektor 44, der die Spannungsdifferenz zwischen den Ausgangsanschlüssen 45 des Senders 26 mit verschiedenen Schwellen vergleicht (Fensterdiskriminator), wodurch erkannt wird, in welchem von mehreren Spannungs-(Detektions-)bereichen die Spannungsdifferenz zwischen den Ausgangsanschlüssen 45 des Teilnehmers 10' bei der Adressierstromeinspeisung liegt. Diese verschiedenen Spannungsbereiche sind grafisch in Fig. 3 gezeigt, wobei auch angegeben ist, welche Teilnehmer in welcher Verbindungskonstellation und in welchen Testschalter- sowie Adressierschalterzuständen durch ihre Detektoren eine Spannung in welchem Spannungsbereich detektieren. Das Ausgangssignal des Detektors 44 wird der Datenverarbeitungseinheit 28 zugeleitet, die den Adressierschalter 42 ansteuert, wie weiter unten noch beschrieben werden wird.

Die Spannungsdifferenz zwischen den Ausgangsanschlüssen 45 des Senders 26 des Teilnehmers 10' wird in der Adressierphase erzeugt durch die Einspeisung eines Adressierstroms einer Adressierstromquelle, bei der es sich vorteilhafterweise um die Stromquelle 37 des Senders 26 handelt, die Adressierstrom in den Zweidraht-Kommunikationsbus 14 oder in zumindest einen der beiden Zweidrahtleitungsabschnitte 20, 22 einspeist oder diesem entnimmt, wie weiter unten noch beschrieben werden wird.

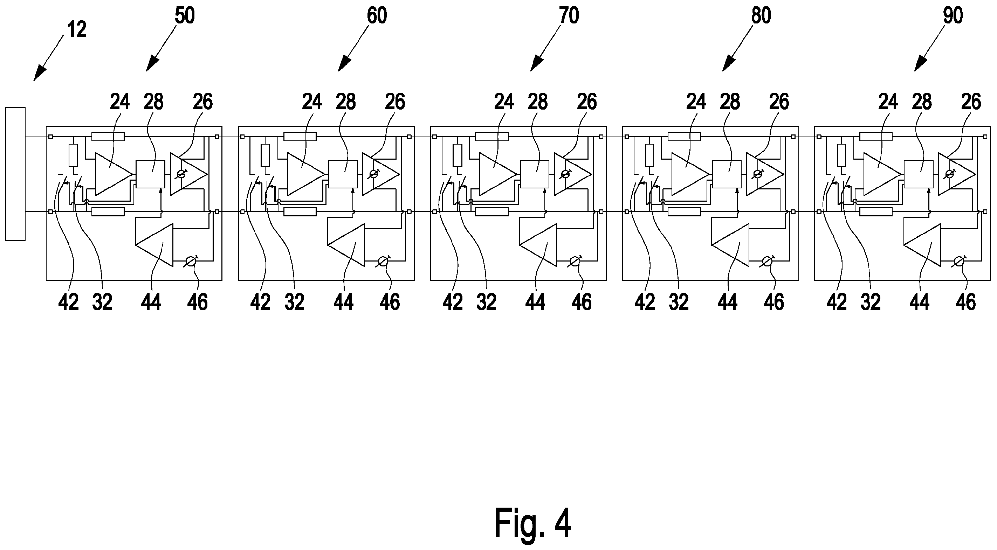

Die wesentliche Aufgabe bei der automatischen Adressvergabe im Kommunikationsbussystem mit einer Vielzahl von Teilnehmers 10' gemäß Fig. 2 sowie dem Busmaster 12 besteht darin, noch nicht adressierte Teilnehmer von bereits adressierten Teilnehmern unterscheiden zu können und ferner defekte Teilnehmer erkennen und von der Vergabe von Adressen ausschließen zu können. Diese Vorgänge sollen nachfolgend anhand der Fign. 4 bis 10 erläutert.

In Fig. 4 ist die Ausgangssituation eines beispielhaften Daisy-Chain-Kommunikationssystems mit fünf Teilnehmer 50, 60, 70, 80 und 90 gemäß Fig. 2 gezeigt. Die Testschalter 32 und die Adressierschalter 42 sämtlicher Teilnehmer sind geöffnet.

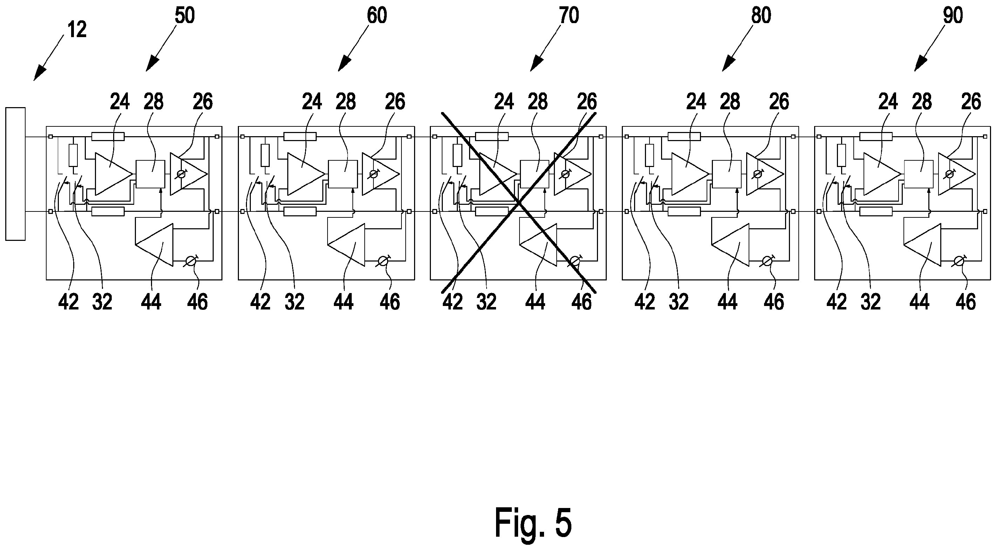

Beispielsweise beim Hochfahren des Kommunikationssystems testen in einer Selbsttestphase sämtliche Teilnehmer sich selbst auf Funktionstüchtigkeit. In diesem Ausführungsbeispiel sei angenommen, dass der Teilnehmer 70 dabei feststellt, dass er defekt ist. Sämtliche funktionstüchtigen Teilnehmer 50, 60, 80 und 90 schließen nun ihre Testschalter 32. Der Testschalter 32 des Teilnehmers 70 bleibt offen (siehe Fig. 5).

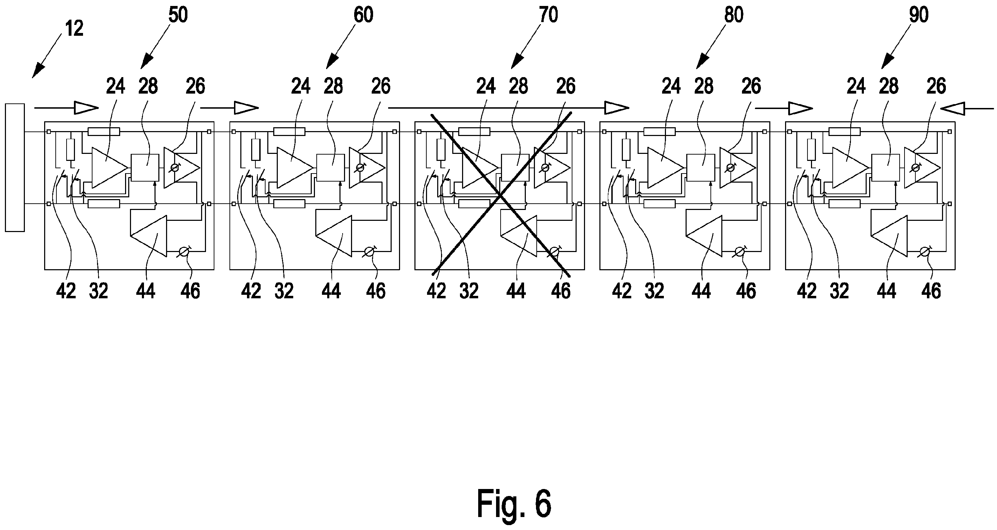

In der nächsten Phase (siehe Fig. 6) beginnt nun die automatische Adressierung der funktionstüchtigen Teilnehmer 50, 60, 80 und 90. Diese Adressierphase umfasst pro zu adressierendem Teilnehmer einen separaten Zyklus. Hierbei speisen jeweils sämtliche bis zum betreffenden Adressvergabezyklus noch nicht adressierten Teilnehmer ihren Adressierstrom in den Zweidraht-Kommunikationsbus ein. Es ist vorgesehen, dass die Identifikation zu adressierender Teilnehmer und die Adressierung der Teilnehmer ausgehend vom am weitesten vom Busmaster 12 entfernt an den Zweidraht-Kommunikationsbus angeschlossenen Teilnehmer stromauf bis zum Busmaster 12 erfolgt (selbstverständlich mit Ausnahme der defekte Teilnehmer). Damit ergeben sich folgende Situationen der Identifikation der Teilnehmer:
1. Der Teilnehmer ist der physikalisch letzte Teilnehmer der Reihenschaltung von zu adressierenden, funktionstüchtigen Teilnehmern, an dessen Ausgang sich also eine "offene" Leitung befindet oder aber ein oder mehrere defekte Teilnehmer befinden, was ebenfalls dem Zustand "offene" Leitung gleichkommt, womit der detektierbare Spannungsabfall größer als ein oberer erster Schwellwert ist, womit die Spannung im ersten Spannungsbereich liegt (siehe Fig. 3). Diese Situation stellt sich nur im ersten Adressierzyklus ein.
2. Ein funktionstüchtiger Teilnehmer befindet sich stromauf eines im vorherigen Zyklus adressierten Teilnehmers. Dessen Adressierschalter ist geschlossen, so dass der Detektor 44 des nächsten zu adressierenden Teilnehmers am Ausgang einen Kurzschluss misst, also einen Spannungsabfall detektiert, der größer als der dritte Schwellwert, der 0 Volt beträgt, ist und in dem dritten Spannungsbereich liegt (siehe Fig. 3).
3. Ein funktionstüchtiger Teilnehmer ist stromauf eines defekten Teilnehmers angeordnet, hinter dem und damit stromab sich der im vorherigen Zyklus adressierte Teilnehmer befindet, dessen Adressierschalter also geschlossen ist. Der nächste zu adressierende Teilnehmer misst also mittels seines Detektors 44 einen Spannungsabfall, der durch die Reihenschaltung der beiden Überbrückungswiderstände 36 des defekten Teilnehmers bestimmt ist. Der Spannungsabfall ist also größer als der vierte Schwellwert und liegt in dem vierten Spannungsbereich (siehe Fig. 3).
4. Jeder funktionstüchtige Teilnehmer, der vor einem noch nicht adressierten, funktionstüchtigen Teilnehmer liegt, detektiert an seinem Ausgang eine Spannung, die größer als der zweite Schwellwert ist und in dem zweiten Spannungsbereich liegt (siehe Fig. 3).
5. Jeder funktionstüchtige Teilnehmer, der stromauf eines defekten Teilnehmers angeordnet ist und sich hinter dem ein noch nicht adressierter, funktionstüchtiger Teilnehmer befindet, detektiert an seinem Ausgang eine Spannung, die größer ist als der fünfte Schwellwert und im fünften Spannungsbereich liegt (siehe Fig. 3).

Damit existiert also pro Adresszyklus stets genau ein Teilnehmer, der einen Spannungsabfall entweder innerhalb des ersten Spannungsbereichs oder innerhalb des dritten Spannungsbereichs oder innerhalb des vierten Spannungsbereich detektiert. Der insoweit jeweils betreffende Teilnehmer übernimmt die Adresse, die der Busmaster am Ende eines Adressierzyklus über den Zweidraht-Kommunikationsbus verschickt, als seine Adresse. Die Übernahme der Adresse kann dem Busmaster von dem betreffenden Teilnehmer gemeldet werden, und zwar entweder über eine zusätzliche Kommunikationsleitung, an der wiederum sämtliche Teilnehmer angeschlossen sind, oder durch Kommunikation auf dem Zweidraht-Kommunikationsbus stromauf bis zum Busmaster. Der adressierte Teilnehmer schließt seinen Adressierschalter und deaktiviert seine Adressierstromquelle, nimmt also an dem weiteren Adressvergabeverfahren nicht mehr teil.

Jeder Adressierzyklus beginnt damit, dass der Busmaster 12 einen Strompuls (Adressierstrompuls) an den mit ihm verbundenen ersten Teilnehmer der Reihenschaltung von Teilnehmern sendet. Der erste Teilnehmer, der diesen Adressierstrompuls empfängt, erzeugt seinerseits durch seinen Sender an seinem Ausgang einen Adressierstrompuls für den nächsten Teilnehmer, um nämlich seine Position innerhalb der Reihenschaltung von Teilnehmern zu identifizieren. Letztendlich arbeitet auch der Busmaster 12 so; denn auch der Busmaster 12 nimmt an jedem Adressierzyklus teil, um letztendlich im letzten Adressierzyklus zu erkennen, dass der letzte noch zu adressierende Teilnehmer der mit dem Busmaster 12 direkt verbundene erste Teilnehmer ist (vorausgesetzt, dass dieser erste Teilnehmer nicht defekt ist). Insoweit verhält sich der Busmaster wie ein Teilnehmer.

Im ersten Adressierzyklus (siehe Fig. 6) speisen also der Busmaster 12 und sämtliche noch nicht adressierten Teilnehmer 50, 60, 80 und 90 durch ihre jeweiligen Stromquellen 37 sequentielle Adressierstrompulse in die Busleitung ein. Anhand der sich nun über den Sendern von Busmaster 12 und der zu adressierenden Teilnehmer 50, 60, 80 und 90 einstellenden Spannungsabfälle, die von den Detektoren 44 erfasst werden, erkennt die Datenverarbeitungseinheit 28 des Teilnehmers 90, dass dieser Teilnehmer der letzte der zu adressierenden Teilnehmer der Reihenschaltung ist. Der jeweilige Spannungsabfall wird mittels einer mehrere Referenzspannungen (Schwellen) vorgebenden Referenzspannungsquelle 46 verglichen; Detektor 44 und Referenzspannungsquelle 46 bilden also einen Fensterdiskriminator. Der Detektor 44 des Teilnehmers 90 erkennt einen Spannungsabfall an seinem Ausgang, der größer ist als der erste Schwellwert, da hinter diesem Teilnehmer 90 die Busleitung offen ist, sein Adressierstrom also durch die Reihenschaltung aus seinen beiden Überbrückungswiderständen und dem zwischen diesen liegenden Abschlusswiderstand fließt, durch den auch der Adressierstrom des vorletzten Teilnehmers fließt. Der Teilnehmer 80 erkennt mittels seines Detektors 44 an seinem Ausgang einen durch den Abschlusswiderstand 30 des letzten Teilnehmers 90 bestimmten Spannungsabfall, der innerhalb des zweiten Spannungsbereichs liegt. Der Teilnehmer 70 nimmt, da er defekt ist, an diesem Prozedere nicht teil. Der Teilnehmer 60 erkennt über seinen Detektor 44 am Ausgang einen Spannungsabfall, der bestimmt ist durch mehrere, nämlich zwei Kaskadierungen aus zwei Überbrückungswiderständen 34 und einem Abschlusswiderstand, und misst eine Ausgangsspannung, die in dem fünften Spannungsbereich liegt. Eine ähnliche Situation, wie im Falle des Teilnehmers 80, stellt sich am Ausgang des Teilnehmers 50 ein. Sein Detektor 44 detektiert also eine Spannung, die im zweiten Spannungsbereich liegt. Auch der Busmaster 12 misst an seinem Ausgang eine Spannung, die im zweiten Spannungsbereich liegt. Damit erfüllt einzig und allein der Teilnehmer 90 eine der oben genannten Bedingungen, die ihn als nächsten zu adressierenden Teilnehmer identifizieren. Wenn nun der Busmaster 12 ein Adresssignal mit Adressdaten auf den Bus legt, so wird dieses sukzessive von Teilnehmer zu Teilnehmer weitergegeben. Als einziger der zu adressierenden Teilnehmer nimmt der Teilnehmer 90 diese Adresse als seine an. In der Folge schließt dieser Teilnehmer 90 seinen Adressierschalter 42 und nimmt am weiteren Adressvergabeverfahren nicht mehr teil. Vor dem Senden des Adressiersignals haben sämtliche Teilnehmer ihre Adressierstromquellen deaktiviert.

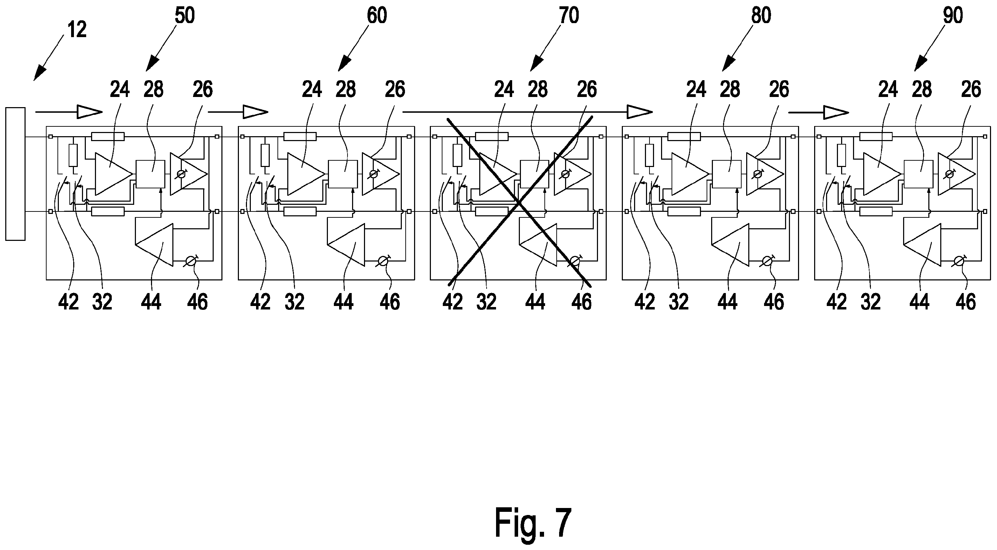

In dem nächsten Adressierzyklus (siehe Fig. 7) speisen nun die noch nicht adressierten Teilnehmer 50, 60 und 80 der zu adressierenden Teilnehmer wiederum sequentielle Adressierstrompulse in den Bus ein. Der Teilnehmer 80 detektiert an seinem Ausgang eine Spannung im dritten Spannungsbereich, da der Adressierschalter des zuvor adressierten Teilnehmers 90 geschlossen ist und sich somit ein Kurzschluss bildet. Der Teilnehmer 60 hingegen detektiert an seinem Ausgang eine Spannung im fünften Spannungsbereich, da nämlich der auf ihn folgende Teilnehmer 70 defekt ist und der Teilnehmer 80 noch nicht adressiert ist, sein Adressierschalter also noch offen ist. Der Teilnehmer 50 detektiert an seinem Ausgang eine Spannung im zweiten Spannungsbereich, da der Adressierschalter des Teilnehmers 60 offen ist. Als einziger Teilnehmer erkennt also der Teilnehmer 80 einen Spannungsabfall entweder im dritten Spannungsbereich oder im vierten Spannungsbereich oder im ersten Spannungsbereich. Konkret detektiert der Teilnehmer 80 einen Kurzschluss, so dass dieser Teilnehmer 80 somit als nächster zu adressierender Teilnehmer identifiziert ist. Die Teilnehmer 50, 60 und 80 beenden die Adressierstromeinspeisung. Der Busmaster 12 legt wiederum ein Adressiersignal mit Adressdaten auf den Kommunikationsbus, wobei ausschließlich der Teilnehmer 80 dieses Adressiersignal und die Adressdaten als seine Adressdaten aufnimmt. Anschließend schließt der Teilnehmer 80 seinen Adressierschalter 42.

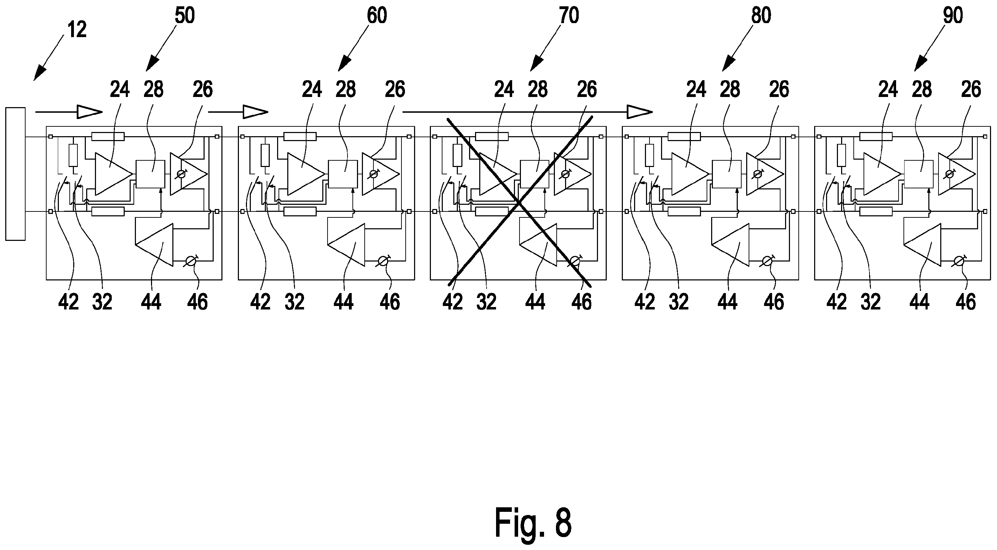

Im nächsten Adressierzyklus (siehe Fig. 8) wird nun der Teilnehmer 60 als nächster zu adressierender Teilnehmer erkannt. Die besondere Situation hierbei ist nun, dass dieser Teilnehmer 60 in der Aufeinanderfolge und Reihenschaltung von Teilnehmern vor dem defekten Teilnehmer 70 angeordnet ist. Dessen beide Schalter (Testschalter 32 und Adressierschalter 42) sind offen. Allerdings ist der Adressierschalter 42 des bereits adressierten Teilnehmers 80 hinter dem defekten Teilnehmer 70 geschlossen, so dass von den beiden zu diesem Zeitpunkt noch nicht adressierten Teilnehmern 50 und 60 es der Teilnehmer 60 ist, der über seinen Detektor 44 eine Spannung innerhalb des vierten Spannungsbereichs erfasst. Das identifiziert ihn als in diesem Adressierzyklus zu adressierenden Teilnehmer; denn der Teilnehmer 50 detektiert eine Spannung im zweiten Spannungsbereich. Die beiden Teilnehmer 50 und 60 beenden ihre Adressierstromeinspeisung. Wenn nun der Busmaster 12 wiederum ein Adressiersignal mit den Adressdaten auf den Bus legt, so ist der Teilnehmer 60 derjenige, der diese Adresse als seine annimmt und abspeichert, wie es der Fall für die Adressen der zuvor adressierten Teilnehmer 80 und 90 war. Der damit adressierte Teilnehmer 60 schließt seinen Adressierschalter 42.

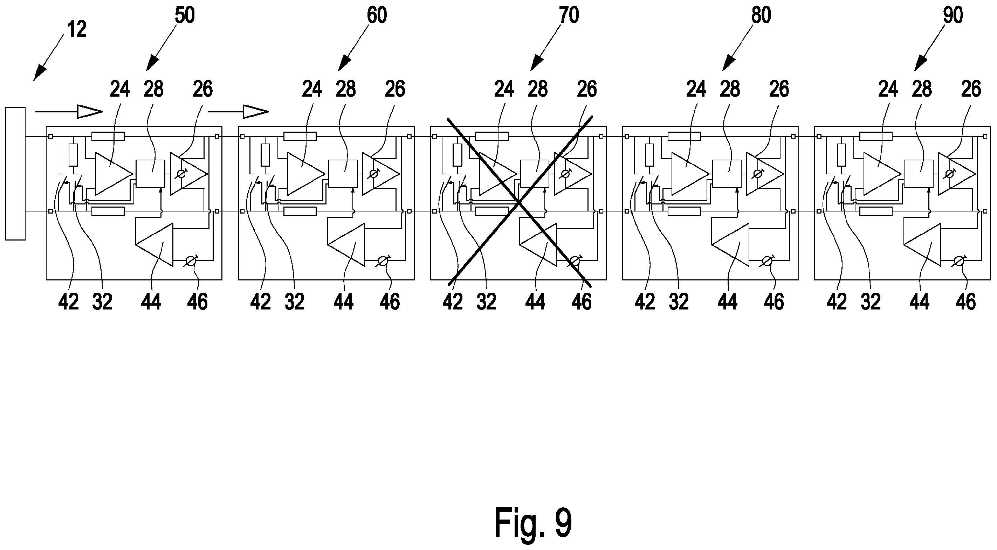

Im letzten Adressierzyklus (siehe Fig. 9), in dem ein Teilnehmer zu adressieren ist, erkennt der Teilnehmer 50 bei der Adressierstromeinspeisung, dass sein Detektor 44 einen Spannungsabfall von im Wesentlichen 0 Volt, also im dritten Spannungsbereich liegend, erfasst. Damit beendet der Teilnehmer 50 nach der vorgegebenen Einspeisezeit die Adressierstromeinspeisung und nimmt die vom Busmaster 12 anschließend auf den Bus gelegten Adressdaten als seine Adresse.

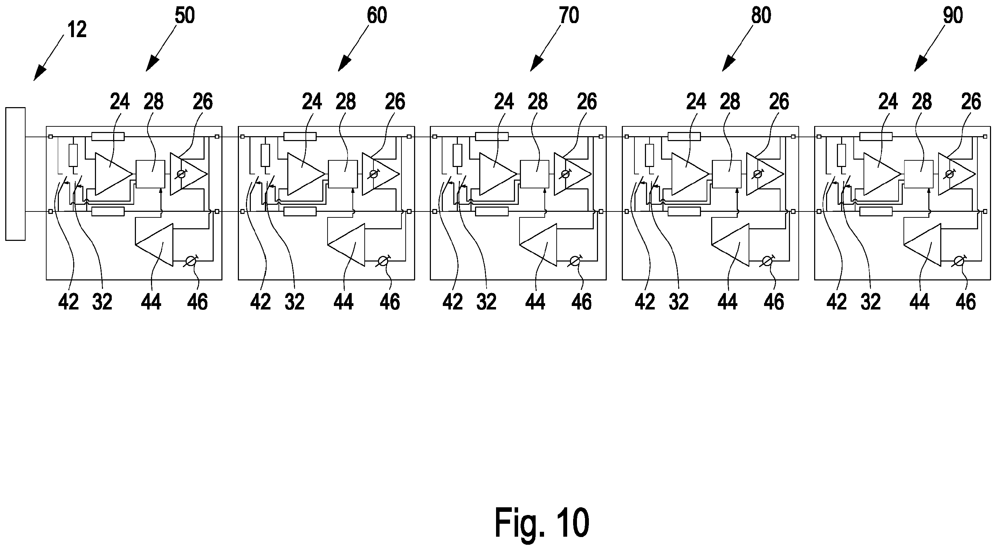

Der Busmaster 12 erkennt anschließend z.B. anhand des geschlossenen Adressierschalters 42 des Teilnehmers 50, der der nächstliegende zum Busmaster 12 ist, dass die Zweidrahtbusleitung kurzgeschlossen ist, was signalisiert, dass nun auch der letzte noch nicht adressierte Teilnehmer adressiert ist. Auf einen entsprechenden Befehl des Busmasters 12 hin öffnen dann sämtliche funktionstüchtigen und nunmehr adressierten Teilnehmer 50, 60, 80 und 90 ihre Adressierschalter 42, so dass sich die Situation gemäß Fig. 10 ergibt. Nun kann der bestimmungsgemäße und applikationsspezifische Betrieb des Kommunikationsbussystems erfolgen. Der defekte Teilnehmer 70 nimmt an dieser Kommunikation insoweit nicht teil, als er keine differenziellen Spannungssignale aufnimmt, sondern diese vielmehr über seine Überbrückungswiderstände automatisch weitergeleitet werden.

Bei dem hier beschriebenen Adressierverfahren liegt in jedem Adressvergabezyklus die Detektionsspannung genau eines der noch nicht adressierten, funktionstüchtigen Teilnehmer in einem Detektionsbereich, der den Teilnehmer als in diesem Adressvergabezyklus zu adressierenden Teilnehmer identifiziert, da dieser Teilnehmer entweder der am Ende der Reihenschaltung angeordnete Teilnehmer ist oder der letzte vor einem nicht funktionstüchtigen Teilnehmer ist oder der letzte vor einem bereits adressierten Teilnehmer ist.

Das zuvor beschriebene Ausführungsbeispiel betrifft den Fall, dass das Bussystem Teilnehmer mit der Möglichkeit der Durchführung von Selbsttests aufweist. In einem Bussystem, bei dem derartige Teilnehmer nicht existieren, sondern das ausschließlich aus Teilnehmern besteht, die sämtlich funktionstüchtig sind bzw. bei denen man annimmt, dass sie sämtlich funktionstüchtig sind, vereinfacht sich die Prozedur der automatischen Adressvergabe. Es erhält immer derjenige Teilnehmer seine Adresse, der eine Spannung entweder im ersten Spannungsbereich (trifft nur für den ersten Adressierzyklus zu) oder im dritten Spannungsbereich misst (trifft für sämtliche weiteren Adressierzyklen zu). Daneben existieren in jedem Adressvergabezyklus Teilnehmer mit detektierten Ausgangsspannungen im zweiten Spannungsbereich. Diese Teilnehmer erhalten in jedem Fall die Adresse nicht. Auch hier gilt, dass in jedem Adressvergabezyklus genau ein Teilnehmer sich dadurch identifiziert, dass er entweder seine Ausgangsspannung im ersten Spannungsbereich oder im dritten Spannungsbereich detektiert.

### BEZUGSZEICHENLISTE

- 10: Teilnehmer
- 10': Teilnehmer
- 12: Busmaster
- 14: Zweidraht-Kommunikationsbus
- 16: erste Leitung
- 18: zweite Leitung
- 20: Zweidrahtleitungsabschnitt
- 22: Zweidrahtleitungsabschnitt
- 24: Empfänger
- 26: Sender
- 28: Datenverarbeitungseinheit
- 29: Leuchtmitteleinheit
- 30: Abschlusswiderstand
- 32: Testschalter
- 33: Eingangsanschlüsse des Empfängers
- 34: erster Überbrückungswiderstand
- 36: zweiter Überbrückungswiderstand
- 37: (Adressier-)Stromquelle
- 38: Eingangsanschluss
- 40: Eingangsanschluss
- 42: Adressierschalter
- 44: Detektor
- 45: Ausgangsanschlüsse des Senders
- 46: Referenzspannungsquelle
- 50: funktionstüchtiger Teilnehmer
- 60: funktionstüchtiger Teilnehmer
- 70: defekter Teilnehmer
- 80: funktionstüchtiger Teilnehmer
- 90: funktionstüchtiger Teilnehmer

## Patentansprüche

1. Teilnehmer für ein Kommunikationsbussystem mit einer mehrere Zweidrahtleitungsabschnitte aufweisenden Zweidrahtleitung als differenzieller Kommunikationsbus zur Verbindung mehrerer Teilnehmer in Reihenschaltung mit einem Busmaster und zur Kommunikation mittels elektrischer differenzieller Signale, wobei die Zweidrahtleitung eine erste Leitung und eine zweite Leitung aufweist und jeder Zweidrahtleitungsabschnitt einen Abschnitt der ersten Leitung und einen Abschnitt der zweiten Leitung umfasst, mit
- einem Empfänger (24) mit zwei Eingangsanschlüssen (33), von denen jeder mit einer anderen der beiden Leitungen (16, 18) eines ersten Zweidrahtleitungsabschnitts (20) verbindbar ist,
- einem Sender (26) mit zwei Ausgangsanschlüssen (45), von denen jeder mit einem anderen der beiden Leitungen (16, 18) eines zweiten Zweidrahtleitungsabschnitts (22) verbindbar ist, und
- einer Datenverarbeitungseinheit (28),
**gekennzeichnet durch**
- eine mit den beiden Leitungen (16, 18) des ersten Zweidrahtleitungsabschnitts (20) verbundene und damit parallel zu den Eingangsanschlüssen (33) des Empfängers (24) angeordnete Serienschaltung aus einem von der Datenverarbeitungseinheit (28) wahlweise in einen geschlossenen oder in einen offenen Schaltzustand überführbaren Testschalter (32) und einem Abschlusswiderstand (30),
- einen ersten Überbrückungswiderstand (34) zwischen demjenigen Eingangsanschluss (33) des Empfängers (24), der mit der ersten Leitung (16) des ersten Zweidrahtleitungsabschnitts (20) zu verbinden ist, und demjenigen Ausgangsanschluss (45) des Senders (26), der mit der ersten Leitung (16) des zweiten Zweidrahtleitungsabschnitts (22) zu verbinden ist, und
- einen zweiten Überbrückungswiderstand (36) zwischen demjenigen Eingangsanschluss (33) des Empfängers (24), der mit der zweiten Leitung (18) des ersten Zweidrahtleitungsabschnitts (20) zu verbinden ist, und demjenigen Ausgangsanschluss (45) des Senders (26), der mit der zweiten Leitung (18) des zweiten Zweidrahtleitungsabschnitts (22) zu verbinden ist.

2. Teilnehmer nach Anspruch 1, **dadurch gekennzeichnet,**
- **dass** die Datenverarbeitungseinheit (28) zur Durchführung eines Selbsttests des Teilnehmers auf Funktionstüchtigkeit ausgelegt ist und den Testschalter (32) dann, wenn die Funktionstüchtigkeit des Teilnehmers gegeben ist, in den einen Schaltzustand überführt und/oder hält, und ansonsten in den anderen Schaltzustand überführt und/oder hält, und
- **dass** ein differenzielles elektrisches Signal zwischen den beiden Leitungen (16, 18) desjenigen Zweidrahtleitungsabschnitts (20), der mit dem Empfänger (24) eines nicht funktionstüchtigen Teilnehmers verbunden ist, über die Überbrückungswiderstände (34, 36) dieses nicht funktionstüchtigen Teilnehmers zu dem Empfänger (24) desjenigen Teilnehmers weiterleitbar ist, dessen Eingang mit den beiden Leitungen (16,18) desjenigen Zweidrahtleitungsabschnitts (22) verbunden ist, an den der Sender (26) des nicht funktionstüchtigen Teilnehmers angeschlossen ist.

3. Teilnehmer nach Anspruch 2, **dadurch gekennzeichnet, dass** die Datenverarbeitungseinheit (28) den Testschalter (32) nur dann schließt, wenn die Funktionstüchtigkeit des Teilnehmers gegeben ist.

4. Verfahren zur Datenkommunikation in einem Kommunikationsbussystem, das versehen ist mit
- einer mehrere Zweidrahtleitungsabschnitte (20, 22) aufweisenden Zweidrahtleitung als differenzieller Kommunikationsbus (14) zur Verbindung mehrerer Teilnehmer (10, 10', 50, 60, 70, 80, 90) in Reihenschaltung mit einem Busmaster (12) und zur Kommunikation mittels differenzieller elektrischer Signale, wobei der Zweidraht-Kommunikationsbus (14) eine erste Leitung (16) und eine zweite Leitung (18) aufweist und jeder Zweidrahtleitungsabschnitt (20,22) einen Abschnitt der ersten Leitung (16) und Abschnitt der zweiten Leitung (18) umfasst,
und
- mehreren Teilnehmern (10, 10', 50, 60, 70, 80, 90), die konfiguriert sind zur Zwischenschaltung zwischen zwei Zweidrahtleitungsabschnitten (20, 22), wobei jeder Teilnehmer (10, 10', 50, 60, 70, 80, 90) versehen ist mit
- einem Empfänger (24) mit zwei Eingangsanschlüssen (33), von denen jeder mit einer anderen der beiden Leitungen (16, 18) eines Zweidrahtleitungsabschnitts (20, 22) verbunden ist,
- einem Sender (26) mit zwei Ausgangsanschlüssen (45), von denen jeder mit einem anderen der beiden Leitungen (16, 18) eines Zweidrahtleitungsabschnitts (20, 22) verbunden ist, und
- einer Datenverarbeitungseinheit (28), die ausgelegt ist zur Durchführung eines Selbsttests des Teilnehmers auf Funktionstüchtigkeit,
- einer mit den beiden Leitungen (16, 18) eines Zweidrahtleitungsabschnitts (20, 22) verbundenen und damit parallel zu den Eingangsanschlüssen (33) des Empfängers (24) angeordneten Serienschaltung aus einem Testschalter (32) und einem Abschlusswiderstand (30), wobei der Testschalter (32) konfiguriert ist zum wahlweisen Überführen durch die Datenverarbeitungseinheit (28) in einen geschlossenen oder in einen offenen Schaltzustand und dann, wenn die Funktionstüchtigkeit des Teilnehmers gegeben ist, in den einen Schaltzustand überführt und/oder in dem einen Schaltzustand gehalten wird und ansonsten in den anderen Schaltzustand überführt und/oder in dem anderen Schaltzustand gehalten wird,
- einem ersten Überbrückungswiderstand (34), der konfiguriert ist, denjenigen Eingangsanschluss (33) des Empfängers (24), der mit der ersten Leitung (16) des ersten Zweidrahtleitungsabschnitts (20) verbunden ist, mit demjenigen Ausgangsanschluss (45) des Senders (26) zu verbinden, der mit der ersten Leitung (16) des zweiten Zweidrahtleitungsabschnitts (22) verbunden ist, und
- einem zweiten Überbrückungswiderstand (36), der konfiguriert ist, denjenigen Eingangsanschluss (33) des Empfängers (24), der mit der zweiten Leitung (18) des ersten Zweidrahtleitungsabschnitts (20) verbunden ist, mit demjenigen Ausgangsanschluss (45) des Senders (26) zu verbinden, der mit der zweiten Leitung (18) des zweiten Zweidrahtleitungsabschnitts (22) verbunden ist,
- wobei ein differenzielles elektrisches Signal zwischen den beiden Leitungen (16, 18) desjenigen Zweidrahtleitungsabschnitts (20), der mit dem Empfänger (24) eines nicht funktionstüchtigen Teilnehmers verbunden ist, über die Überbrückungswiderstände (34, 36) dieses nicht funktionstüchtigen Teilnehmers zu dem Empfänger (24) desjenigen Teilnehmers weitergeleitet wird, dessen Eingang mit den beiden Leitungen (16,18) desjenigen Zweidrahtleitungsabschnitts (22) verbunden ist, an den der Sender (26) des nicht funktionstüchtigen Teilnehmers angeschlossen ist.
wobei bei dem Verfahren
- der Sender (26) und gegebenenfalls der Empfänger (24) eines nicht funktionstüchtigen Teilnehmers inaktiv geschaltet wird und ein solcher Sender (26) kein differenzielles elektrisches Ausgangssignal ausgibt und ein gegebenenfalls vorliegender solcher Empfänger (24) kein differenzielles elektrisches Ausgangssignal annimmt,
- der Sender (26) des zum nicht funktionstüchtigen Teilnehmer in Richtung zum Busmaster (12) hin und damit zum in Richtung stromauf der Reihenschaltung betrachtet nächstgelegenen funktionstüchtigen Teilnehmer über die Überbrückungswiderstände (34, 36) des nicht funktionstüchtigen Teilnehmers mit dem Empfänger (24) des zum nicht funktionstüchtigen Teilnehmer in Richtung vom Busmaster (12) weg und damit zum in Richtung stromab der Reihenschaltung betrachtet nächstgelegenen funktionstüchtigen Teilnehmer oder umgekehrt kommuniziert.

5. Verfahren nach Anspruch 4, **dadurch gekennzeichnet, dass** der Testschalter (32) konfiguriert ist, von der Datenverarbeitungseinheit (28) dann geschlossen zu werden, wenn die Funktionstüchtigkeit des Teilnehmers gegeben ist.

## Claims

1. A subscriber for a communication bus system with a two-wire line having a plurality of two-wire line portions as differential communication bus for connecting a plurality of subscribers in series connection to a bus master and for communicating by means of differential electrical signals, the two-wire line having a first line and a second line and each two-wire line portion comprising a portion of the first line and a portion of the second line, comprising
- a receiver (24) having two input terminals (33), each of which is connectable to a different one of the two lines (16, 18) of a first two-wire line portion (20),
- a transmitter (26) having two output terminals (45) each of which is connectable to a different one of the two lines (16, 18) of a second two-wire line portion (22), and
- a data processing unit (28),
**characterized by**
- a series connection connected to both lines (16, 18) of the first two-wire line portion (20) and thus arranged in parallel with the input terminals (33) of the receiver (24), said series connection being formed by a test switch (32), which is adapted to be selectively transferred into a closed or an open switching state by the data processing unit (28), and a terminating resistor (30),
- a first bridging resistor (34) between that input terminal (33) of the receiver (24) that is to be connected to the first line (16) of the first two-wire line portion (20), and that output terminal (45) of the transmitter (26) that is to be connected to the first line (16) of the second two-wire line portion (22), and
- a second bridging resistor (36) between that input terminal (33) of the receiver (24) that is to be connected to the second line (18) of the second two-wire line portion (20), and that output terminal (45) of the transmitter (26) that is to be connected to the first line (18) of the second two-wire line portion (22).

2. The subscriber according to claim 1, **characterized in that**
- the data processing unit (28) is designed for performing a functionality self-test of the subscriber and, if the subscriber is functional, transfers and/or keeps the test switch (32) in one switching state, while otherwise transferring and/or keeping the same in the other switching state, and
- a differential electric signal can be forwarded between the two lines (16, 18) of that two-wire line portion (20) that is connected to the receiver (24) of a non-functional subscriber, via the bridging resistors (34, 36) of this non-functional subscriber, to the receiver (24) of the subscriber whose input is connected to the two lines (16, 18) of the two-wire line portion (22) to which the transmitter (26) of the non-functional subscriber is connected.

3. The subscriber according to claim 2, **characterized in that** the data processing unit (28) closes the test switch (32) only if the subscriber is functional.

4. A method for data communication in a communication bus system which is provided with
- a two-wire line having a plurality of two-wire line portions (20, 22) as differential communication bus (14) for connecting a plurality of subscribers (10, 10', 50, 60, 70, 80, 90) n series connection to a bus master (12) and for communicating by means of differential electrical signals, the two-wire communication bus (14) having a first line (16) and a second line (18) and each two-wire line portion (20, 22) comprising a portion of the first line (16) and a portion of the second line (18),
and
- a plurality of subscribers (10, 10', 50, 60, 70, 80, 90) configured for interconnection between two two-wire line portions (20, 22), each subscriber (10, 10', 50, 60, 70, 80, 90) being provided with
- a receiver (24) having two input terminals (33), each of which is connected to a different one of the two lines (16, 18) of a two-wire line portion (20, 22),
- a transmitter (24) having two output terminals (45), each of which is connected to a different one of the two lines (16, 18) of a two-wire line portion (20, 22),
- a data processing unit (28) configured for performing a self-test of the subscriber for functionality,
- a series connection of a test switch (32) and a terminating resistor (30), the series connection being connected to the two lines (16, 18) of a two-wire line portion (20, 22) and thus arranged in parallel with the input terminals (33) of the receiver (24), the test switch (32) being configured to be transferable by the data processing unit (28) into a closed or open switching state and, if the subscriber is functional, is transferred into one switching state and/or maintained in said one switching state, and, otherwise, is transferred into the other switching state and/or is maintained in said other switching state,
- a first bridging resistor (34) configured to connect the input terminal (33) of the receiver (24) that is connected to the first line (16) of the first two-wire line portion (20) to the output terminal (45) of the transmitter (26) that is connected to the first line (16) of the second two-wire line portion (22), and
- a second bridging resistor (36) configured to connect the input terminal (33) of the receiver (24) that is connected to the second line (18) of the first two-wire line portion (20) to the output terminal (45) of the transmitter (26) that is connected to the first line (18) of the second two-wire line portion (22),
- wherein a differential electric signal can be forwarded between the two lines (16, 18) of that two-wire line portion (20) that is connected to the receiver (24) of a non-functional subscriber, via the bridging resistors (34, 36) of this non-functional subscriber, to the receiver (24) of the subscriber whose input is connected to both lines (16, 18) of the two-wire line portion (22) to which the transmitter (26) of the non-functional subscriber is connected.
wherein, in the method,
- the transmitter (26) and, possibly, the receiver (24) of a non-functional subscriber are switched to be inactive, and such a transmitter (26) does not output a differential electrical output signal, and such a receiver (24), possibly existing, does not receive a differential electrical signal,
- the transmitter (26) of the functional subscriber located in the direction toward the bus master (12) and thus next to the non-functional subscriber, seen in the upstream direction of the series connection, communicates, via the bridging resistors (34, 36) of the non-functional subscriber, with the receiver (24) of the functional subscriber located, relative to the non-functional subscriber, in the direction away from the bus master (12) and thus next to the functional subscriber, seen in the direction downstream of the series connection, or vice versa.

5. The method according to claim 4, **characterized in that** the test switch (32) is configured to be closed by the data processing unit (28) if the subscriber is functional.

## Revendications

1. Abonné pour un système de bus de communication comprenant une ligne bifilaire présentant plusieurs tronçons de ligne bifilaire comme bus de communication différentiel pour la connexion de plusieurs abonnés en série avec un maître de bus et pour la communication au moyen de signaux électriques différentiels, la ligne bifilaire présentant une première ligne et une deuxième ligne, et chaque tronçon de ligne bifilaire comprenant un tronçon de la première ligne et un tronçon de la deuxième ligne, comprenant
- un récepteur (24) ayant deux bornes d'entrée (33), dont chacune peut être connectée à une autre ligne parmi les deux lignes (16, 18) d'un premier tronçon de ligne bifilaire (20),
- un émetteur (26) ayant deux bornes de sortie (45), dont chacune peut être connectée à une autre ligne parmi les deux lignes (16, 18) d'un deuxième tronçon de ligne bifilaire (22), et
- une unité de traitement de données (28),
**caractérisé par**
- un circuit série connecté aux deux lignes (16, 18) du premier tronçon de ligne bifilaire (20) et donc disposé en parallèle avec les bornes d'entrée (33) du récepteur (24) et constitué d'un commutateur de test (32), pouvant être amené au choix dans un état de commutation fermé ou ouvert par l'unité de traitement de données (28), et d'une résistance de terminaison (30),
- une première résistance de pontage (34) entre la borne d'entrée (33) du récepteur (24), borne qui doit être connectée à la première ligne (16) du premier tronçon de ligne bifilaire (20), et la borne de sortie (45) de l'émetteur (26) qui doit être connectée à la première ligne (16) du deuxième tronçon de ligne bifilaire (22), et
- une deuxième résistance de pontage (36) entre la borne d'entrée (33) du récepteur (24), borne qui doit être connectée à la deuxième ligne (18) du premier tronçon de ligne bifilaire (20), et la borne de sortie (45) de l'émetteur (26) qui doit être connectée à la deuxième ligne (18) du deuxième tronçon de ligne bifilaire (22).

2. Abonné selon la revendication 1, **caractérisé en ce que**
- l'unité de traitement de données (28) est conçue pour effectuer un autotest de fonctionnement de l'abonné et pour, si le fonctionnement de l'abonné est assuré, faire passer et/ou maintenir le commutateur de test (32) dans un état de commutation et, sinon, le faire passer et/ou maintenir dans l'autre état de commutation, et
- **en ce qu'**un signal électrique différentiel entre les deux lignes (16, 18) du tronçon de ligne bifilaire (20) qui est connecté au récepteur (24) d'un abonné qui ne fonctionne pas peut être transmis, par l'intermédiaire des résistances de pontage (34, 36) de cet abonné qui ne fonctionne pas, au récepteur (24) de l'abonné dont l'entrée est connectée aux deux lignes (16, 18) du tronçon de ligne bifilaire (22) auquel est raccordé l'émetteur (26) de l'abonné qui ne fonctionne pas.

3. Abonné selon la revendication 2,
**caractérisé en ce que** l'unité de traitement de données (28) ne ferme le commutateur de test (32) que si le fonctionnement de l'abonné est assuré.

4. Procédé de communication de données dans un système de bus de communication, comprenant
- une ligne bifilaire présentant plusieurs tronçons de ligne bifilaire (20, 22) comme bus de communication différentiel (14) pour la connexion de plusieurs abonnés (10, 10', 50, 60, 70, 80, 90) en série avec un maître de bus (12) et pour la communication au moyen de signaux électriques différentiels, le bus de communication bifilaire (14) présentant une première ligne (16) et une deuxième ligne (18), chaque tronçon de ligne bifilaire (20, 22) comprenant un tronçon de la première ligne (16) et un tronçon de la deuxième ligne (18), et
- plusieurs abonnés (10, 10', 50, 60, 70, 80, 90) configurés pour être interconnectés entre deux tronçons de ligne bifilaire (20, 22), chaque abonné (10, 10', 50, 60, 70, 80, 90) comprenant
- un récepteur (24) ayant deux bornes d'entrée (33), dont chacune est connectée à une autre ligne parmi les deux lignes (16, 18) d'un tronçon de ligne bifilaire (20, 22),
- un émetteur (26) ayant deux bornes de sortie (45), dont chacune est connectée à une autre ligne parmi les deux lignes (16, 18) d'un tronçon de ligne bifilaire (20, 22), et
- une unité de traitement de données (28) conçue pour effectuer un autotest de fonctionnement de l'abonné,
- un circuit série connecté aux deux lignes (16, 18) du tronçon de ligne bifilaire (20, 22) et donc disposé en parallèle avec les bornes d'entrée (33) du récepteur (24) et constitué d'un commutateur de test (32) et d'une résistance de terminaison (30), sachant que le commutateur de test (32) est configuré pour être amené au choix dans un état de commutation fermé ou ouvert par l'unité de traitement de données (28), et, si le fonctionnement de l'abonné est assuré, est amené dans un état de commutation et/ou est maintenu dans un état de commutation, sinon est amené dans l'autre état de commutation et/ou est maintenu dans l'autre état de commutation,
- une première résistance de pontage (34) configuré pour connecter la borne d'entrée (33) du récepteur (24), qui est connectée à la première ligne (16) du premier tronçon de ligne bifilaire (20), à la borne de sortie (45) de l'émetteur (26), qui est connectée à la première ligne (16) du deuxième tronçon de ligne bifilaire (22), et
- une deuxième résistance de pontage (36) configurée pour connecter la borne d'entrée (33) du récepteur (24), qui est connectée à la deuxième ligne (18) du premier tronçon de ligne bifilaire (20), à la borne de sortie (45) de l'émetteur (26), qui est connectée à la deuxième ligne (18) du deuxième tronçon de ligne bifilaire (22),
- sachant qu'un signal électrique différentiel entre les deux lignes (16, 18) du tronçon de ligne bifilaire (20) qui est connecté au récepteur (24) d'un abonné qui ne fonctionne pas est transmis, par l'intermédiaire des résistances de pontage (34, 36) de cet abonné qui ne fonctionne pas, au récepteur (24) de l'abonné dont l'entrée est connectée aux deux lignes (16, 18) du tronçon de ligne bifilaire (22) auquel est raccordé l'émetteur (26) de l'abonné qui ne fonctionne pas,
sachant que dans le procédé
- l'émetteur (26) et éventuellement le récepteur (24) d'un abonné qui ne fonctionne pas est commuté vers un état inactif et un tel émetteur (26) n'émet pas de signal de sortie électrique différentiel, et un tel récepteur (24) éventuellement présent n'accepte pas de signal de sortie électrique différentiel,
- l'émetteur (26) de l'abonné qui fonctionne et qui le plus proche de l'abonné qui ne fonctionne pas, vu dans la direction vers le maître de bus (12) et donc dans la direction amont du circuit série, communique, par l'intermédiaire des résistances de pontage (34, 36) de l'abonné qui ne fonctionne pas, avec le récepteur (24) de l'abonné qui fonctionne et qui est le plus proche de l'abonné qui ne fonctionne pas, vu dans la direction en éloignement du maître de bus (12) et donc dans la direction aval du circuit en série, ou inversement.

5. Procédé selon la revendication 4,
**caractérisé en ce que** le commutateur de test (32) est configuré pour être fermé par l'unité de traitement de données (28) si le fonctionnement de l'abonné est assuré.
